# EUROPEAN PATENT SPECIFICATION

(11) **EP 3 029 401 B1**
(45) Date of publication and mention of the grant of the patent: **06.02.2019**
(21) Application number: 15198015.8
(22) Date of filing: 04.12.2015
(51) Int. Cl.: F25D 23/06, F25D 25/02

(54) **REFRIGERATOR**
KÜHLSCHRANK
RÉFRIGÉRATEUR

(30) Priority: 04.12.2014 KR 20140173106
(43) Date of publication of application: 08.06.2016
(73) Proprietor: LG Electronics Inc., Yeongdeungpo-gu Seoul 150-721 (KR)
(72) Inventor: YI, Myeongha, 08592 Seoul (KR); LEE, Jaeyoul, 08592 Seoul (KR); KIM, Taegyeong, 08592 Seoul (KR)
(74) Representative: Morrall, Jonathan Ian McLachlan

(56) References cited:
- US-A- 2 432 931
- US-A- 2 622 412

## Description

This application claims the benefit of Korean Patent Application No. 10-2014-0173106, filed on, December 4, 2014.

### BACKGROUND OF THE INVENTION

### Field of the Invention

The present invention relates to a refrigerator and an evaporator for the same. More particularly, the present invention relates to a refrigerator which ensures easy expansion of a freezing compartment thereof, and to an evaporator applied to the refrigerator.

### Discussion of the Related Art

In general, a refrigerator is an apparatus in which cold air, generated via a refrigeration cycle consisting of, for example, a compressor, a condenser, an expansion valve, and an evaporator, is supplied into a storage compartment to keep food stored in the storage compartment at freezing or less or at a temperature slightly above freezing.

A typical refrigerator internally defines two storage compartments including a freezing compartment in which foods or beverages are kept frozen and a refrigerating compartment in which foods or beverages are kept cold.

There are several kinds of refrigerators including a top mounting type refrigerator in which a freezing compartment is located above a refrigerating compartment, a bottom freezer type refrigerator in which a freezing compartment is located below a refrigerating compartment, and a side by side type refrigerator in which a freezing compartment and a refrigerating compartment are divided into left and right sides.

Among refrigerators that include both a freezing compartment and a refrigerating compartment, there are refrigerators in which a single storage space inside a cabinet is opened or closed by a single door. That is, a refrigerator, in which part of a single storage space is used as a freezing compartment and the remainder is used as a refrigerating compartment, may be provided.

The door may be pivotably mounted at one side of the cabinet, and access to the refrigerating compartment and the freezing compartment may be implemented by opening the door. The freezing compartment may be defined by partitioning part of the storage space and a freezing compartment door may be additionally mounted to the front of the freezing compartment. That is, the freezing compartment may be accessed by first opening a main door, and subsequently opening an internal sub door (the freezing compartment door).

The freezing compartment may be separated from the refrigerating compartment by a partition wall and the freezing compartment door, so as to be maintained at a lower temperature than the refrigerating compartment, which defines the remainder of the storage space.

In the refrigerator described above, an indirect cooling type evaporator may be used, which is installed in a cold air generation room defined as a space separate from the storage space, and generates cold air via heat exchange between the refrigerant and air passing therethrough so as to allow the cold air to be blown into the storage space, or a direct cooling type evaporator may be used, which is installed in the storage space and performs direct heat exchange with the air inside the storage space so as to cool the air.

In the case where only one direct cooling type evaporator is provided, it is generally installed near the freezing compartment because the freezing compartment is required to be maintained at a lower temperature than the refrigerating compartment.

In a conventional refrigerator, a freezing compartment and a refrigerating compartment have prescribed fixed volumes, and the freezing compartment is generally constructed so as to be smaller than the refrigerating compartment.

By the way, it has become necessary to provide a refrigerator that allows the size of the storage space in each of the freezing compartment and the refrigerating compartment to be varied according to the user's tendency and the kinds of food to be stored.

Accordingly, by moving the partition wall between the freezing compartment and the refrigerating compartment, the resulting variable space may be used as the freezing compartment or the refrigerating compartment.

Since a drive device to move the partition wall is installed near the freezing compartment, however, defrosting water generated on the evaporator flows to the drive device, thus causing the drive device to be covered with ice.

In addition, since the amount of space in the freezing compartment is variable, the direct cooling type evaporator requires a configuration that ensures the effective cooling of the surrounding air. That is, it may be said that there is a demand for a refrigerator that is capable of providing satisfactory freezing performance to a freezing compartment that is expandable in volume as well as to freezing compartment having a fixed volume.

Meanwhile, a refrigerator, in which a freezing compartment and a refrigerating compartment are divided from each other via a partition space rather than a partition wall may be provided. The partition space may be provided as a chiller chamber, which has a low temperature region as an intermediate region between the freezing compartment and the refrigerating compartment. As such, in the case where the freezing compartment and the refrigerating compartment are divided from each other via the partition space, rather than simply using the partition wall, it is very difficult to vary the amount of space in the freezing compartment.

US 2,622,412 relates to refrigerators and, particularly, to household refrigerators of the general type in which a partition is arranged with the refrigerator cabinet to divide the total storage space into two adjacent storage compartments, one serving for the storage of food at non-freezing temperatures and the other serving for the storage of food at freezing temperatures. More specifically, US 2,622,412 discloses a refrigerator of the above-mentioned variety in which each compartment is supplied with its own evaporator, and in which provision is made to adjust the position of the partition and evaporators within the cabinet so as to vary the ratio of freezing space to total storage space. US 2,622,412 discloses the features of the preamble of claim 1.

### SUMMARY OF THE INVENTION

Accordingly, the present invention is directed to a refrigerator that substantially obviate one or more problems due to limitations and disadvantages of the related art.

According to the invention, there is provided a refrigerator as claimed in claim 1.

Through one example, there is provided a refrigerator, which enables variable adjustment of the size of a freezing compartment thereof via movement of a partition wall between the freezing compartment and a refrigerating compartment.

Through one example, there is provided a refrigerator, which has a structure that ensures the effective drainage of defrosting water, so as to prevent the defrosting water, which is generated on an evaporator installed near a freezing compartment, from flowing to a drive device which moves a partition wall.

Through one embodiment, another object of the present invention is to provide a refrigerator with an evaporator, which has a structure that ensures the effective cooling of a variable freezing space, in addition to a fixed freezing space.

Through one embodiment, another object of the present invention is to provide a refrigerator, which may divide a freezing compartment and a refrigerating compartment from each other via a partition space (chiller chamber) while still allowing effective variation in the size of a freezing space.

Through one embodiment, another object of the present invention is to provide a refrigerator, in which a freezing compartment to be expanded is surrounded by at least three evaporators, which ensures the provision of effective freezing performance even to the expanded freezing compartment.

Through one embodiment, another object of the present invention is to provide a refrigerator, which allows components, which are moved in order to vary the size of a freezing space, to be firmly and stably supported, and also allows a user to easily vary the size of the freezing space.

Through one embodiment, another object of the present invention is to provide a refrigerator in which a freezing compartment and a refrigerating compartment may be isolated from each other in a single storage region, and, in addition to a door of the refrigerator, a freezing compartment door is provided so as to open or close the freezing compartment after the door of the refrigerator is opened.

Through one embodiment, a further object of the present invention is to provide a refrigerator, which includes a cover capable of hermetically sealing a freezing compartment to be expanded.

Additional advantages, objects, and features will be set forth in part in the description which follows and in part will become apparent to those having ordinary skill in the art upon examination of the following or may be learned from practice. The objectives and other advantages may be realized and attained by the structure particularly pointed out in the written description and claims hereof as well as the appended drawings.

A refrigerator according to the invention includes a cabinet having a storage compartment therein, a door mounted to the cabinet so as to open or close the storage compartment, a fixed freezing compartment having a fixed capacity provided in an upper region of the storage compartment, an evaporator configured to define the fixed freezing compartment, an elevating frame movable with respect to the fixed freezing compartment, the elevating frame defining an additional expandable freezing compartment between the evaporator and the elevating frame, and fixed frames secured to respective sidewalls of the storage compartment so as to guide and support movement of the elevating frame.

The fixed frames may be provided in both sides of the storage compartment, and a space for vertical movement of the elevating frame may be defined between the respective fixed frames.

The fixed frames provided at the two respective sidewalls of the storage compartment may include a pair of fixed guides, and the elevating frame may include a bottom plate portion extending from one fixed guide to the other fixed guide.

The refrigerator may further include a support bar pivotably provided between the elevating frame and the fixed frames, the support bar being configured to guide and support vertical movement of the elevating frame.

The support bar may be provided in plural number, and a plurality of support bars may be spaced apart from one another in a front-and-rear direction.

The support bar may include a pivot shaft portion rotatably mounted to the bottom plate portion of the elevating frame and configured to support the bottom plate portion across a left-and-right direction, support shaft portions bent from both ends of the pivot shaft portion and configured to vertically support the bottom plate portion, and mounting shaft portions bent from lower ends of the support shaft portions toward the fixed guides and connected to the fixed guides.

The elevating frame may be moved downward relative to the fixed frames as an angle between the bottom plate portion and the support shaft portions is gradually decreased from a right angle, and the elevating frame may be supported at four or more points in all directions by the support bars.

Each fixed frame may have a vertical guide groove, and the elevating frame may have a guide protrusion configured to be inserted into the vertical guide groove so as to guide vertical movement of the elevating frame.

Each fixed guide may have a support rib configured to support the elevating frame at a position at which the elevating frame is moved downward.

The elevating frame may include sidewall plate portions extending upward from both side ends of the bottom plate portion, and a shelf panel connected to upper ends of the sidewall plate portions and spaced upward apart from the bottom plate portion by a prescribed distance.

The elevating frame may define a chiller chamber together with the bottom plate portion, the sidewall plate portions, and the shelf panel.

The refrigerator may further include a drawer configured to be pushed into or pulled out of the chiller chamber.

The shelf panel may come into contact with the evaporator when the elevating frame is moved upward, and the expanded freezing compartment, serving as an expanded freezing space, is defined between the evaporator and the shelf panel when the elevating frame is moved downward.

The shelf panel may be charged with a cold storage material.

The shelf panel may be provided with a pivoting cover, and the pivoting cover may be configured to pivot back and forth so as to open or close a front side of the expanded freezing compartment.

The pivoting cover may be slidable rearward along the shelf panel in a state in which the elevating frame is moved upward. Accordingly, when the freezing compartment is expanded, the pivoting cover covers the expanded freezing compartment. Contrary, when the freezing compartment is not expanded, the pivoting cover overlaps the shelf panel. That is, the pivoting cover slides to the shelf panel to thereby overlap the shelf panel. In this way, the pivoting cover may be hidden in a state in which the freezing compartment is not expanded. This is because the pivoting cover is unnecessary when the freezing compartment is not expanded.

The evaporator may include an upper surface portion, a left side surface portion, and a right side surface portion respectively forming an upper surface, a left side surface, and a right side surface of the freezing compartment.

The evaporator may further include a rear surface portion forming a rear surface of the freezing compartment.

The evaporator may include a lower surface portion forming a lower surface of the freezing compartment, and the freezing compartment may be a fixed freezing compartment having a fixed capacity (inner volume).

The refrigerator may further include a freezing compartment door configured to open or close the fixed freezing compartment. That is, the freezing compartment door, configured to open or close only the freezing compartment, may be provided, separately from the door configured to open or close the storage compartment. Accordingly, a user can retrieve stored items inside the fixed freezing compartment only when freezing compartment door is opened after the opening of the storage compartment. In this way, in a case where the single storage compartment is divided into the freezing compartment and the refrigerating compartment, the interior of the freezing compartment may more effectively remain a temperature below zero degrees.

The evaporator may further include a left extension and a right extension extending downward from the left side surface portion and the right side surface portion beyond the lower surface portion, and the left extension, the right extension, and the lower surface portion may define the expanded freezing compartment when the elevating frame is moved downward. Of course, the expanded freezing compartment disappears when the elevating frame is moved upward.

The fixed frames may be respectively provided with drain grooves, and the drain grooves may be located below the left extension and the right extension such that defrosting water generated on the evaporator is introduced into the drain grooves.

The elevating frame may be provided at a rear portion thereof with a drain groove such that defrosting water generated on the evaporator is introduced into the drain groove.

Accordingly, defrosting water introduced into the elevating frame as well as defrosting water introduced into the fixed frames may be effectively removed.

The evaporator may be formed into a single plate, a rear surface portion of the evaporator may be bent from a rear end of the lower surface portion, the upper surface portion may be bent from an upper end of the rear surface portion, the left side surface portion may be bent from a left end of the upper surface portion, and the right surface portion may be bent from a right end of the upper surface portion. Of course, the single plate may be a plate fabricated as upper and lower plates overlap each other.

The lower surface portion may be welded at left and right ends thereof to the left side surface portion and the right side surface portion so as to define the freezing compartment. That is, the lower surface portion may be firmly secured to the right side surface portion and the left side surface portion. In this way, the freezing compartment space, i.e. the fixed freezing compartment, the upper and lower sides, the left and right sides, and the rear side of which is substantially closed, may be defined.

Another example refrigerator includes a cabinet having a storage compartment therein, a door mounted to the cabinet so as to open or close the storage compartment, a freezing compartment defined in an upper region of the storage compartment, a refrigerating compartment defined in the storage compartment below the freezing compartment, an elevator configured to form the freezing compartment, an elevating frame configured to define a chiller chamber between the freezing compartment and the refrigerating compartment, the elevating frame being vertically movably provided below the freezing compartment and defining an expanded freezing compartment between the freezing compartment and the chiller chamber when moved downward, and fixed frames secured to two respective sidewalls of the storage compartment so as to guide and support vertical movement of the elevating frame.

Another example refrigerator includes a cabinet having a storage compartment therein, the storage compartment being divided into a freezing compartment and a refrigerating compartment, a door mounted to the cabinet so as to open or close both the freezing compartment and the refrigerating compartment at the same time, and a freezing compartment assembly provided in an upper region of the storage compartment so as to define the freezing compartment separately from the refrigerating compartment, wherein the freezing compartment assembly includes an evaporator including an open front side, a left side surface portion, a right side surface portion, and a lower surface portion, the evaporator defining the freezing compartment, an elevating frame vertically movably provided below the lower surface portion, the elevating frame defining an expanded freezing compartment when moved downward, and fixed frames secured to two respective sidewalls of the storage compartment so as to guide and support vertical movement of the elevating frame, the fixed frames defining a space for vertical movement of the elevating frame therein.

The evaporator may further include an upper surface portion and a lower surface portion, and the freezing compartment may have a substantially cuboidal inner space such that a front side of the freezing compartment is open.

The evaporator may include a left extension (a first side extension) and a right extension (a second side extension) extending downward from lower ends of the left side surface portion and the right side surface portion, and the left extension and the right extension may be connected respectively to the fixed frames provided in both sides of the storage compartment.

Accordingly, the elevating frame may be moved downward in a space between the evaporator and the fixed frames, so as to define the expanded freezing compartment.

Each fixed frame may be provided in an upper surface thereof with a drain groove, and the drain groove is configured to receive defrosting water introduced from the left extension or the right extension.

The elevating fame may include a bottom plate portion extending from one fixed frame to the remaining fixed frame, a shelf plate spaced upward apart from the bottom plate portion so as to define a chiller chamber between the shelf plate and the bottom plate, a left sidewall plate portion and a right sidewall plate portion provided to connect both ends of the bottom plate portion and the shelf plate to each other, and a drawer configured to be pulled into or pushed out of the chiller chamber.

The freezing compartment assembly may further include a support bar pivotably provided between the elevating frame and the fixed frames, the support bar having a support shaft portion configured to support the elevating frame while moving the elevating frame downward as an angle between the bottom plate portion and the support shaft portion is decreased from a right angle to a predetermined acute angle, the support shaft portion forming support points arranged to support at least four locations, including front and rear locations and left and right locations, of the elevating frame.

Another example refrigerator includes a cabinet having a storage compartment therein, a door mounted to the cabinet so as to open or close the storage compartment, a freezing compartment provided in an upper region of the storage compartment, an evaporator disposed on a wall surface of the freezing compartment, an elevating frame vertically movably provided below the freezing compartment, the elevating frame defining a storage space therein, and fixed frames secured to two respective sidewalls of the storage compartment below the freezing compartment so as to guide and support vertical movement of the elevating frame.

Here, the fixed frames may mean that fixed frames are provided respectively at left and right sides of the storage compartment.

The refrigerator may further include a support bar pivotably provided between the elevating frame and the fixed frames, the support bar being configured to guide and support vertical movement of the elevating frame.

The elevating frame may include a bottom plate portion, and a pair of sidewall plate portions extending upward from both side ends of the bottom plate portion.

The support bar may include a pivot shaft portion rotatably mounted to the elevating frame, support shaft portions bent from both ends of the pivot shaft portion, and mounting shaft portions bent from lower ends of the support shaft portions toward the fixed frames. A pair of support bars may be provided at front and rear positions of the bottom plate portion.

The support bars may be configured such that the pivot shaft portions, arranged at both sides of the elevating frame so as to face each other, are connected to each other so as to be rotated together.

The pivot shaft portions, connected to each other, may be pivotably mounted by a pair of bearings coupled to a lower surface of the bottom plate portion.

Each fixed frame may include a horizontal guide slot perforated in a lower portion thereof to enable passage and sliding of a corresponding one of the mounting shaft portions.

Each fixed frame may further have a vertical guide groove formed in a front portion of an inner surface thereof, and the elevating frame may have a guide protrusion protruding from an outer side surface, the guide protrusion being configured to be inserted into the vertical guide groove so as to guide vertical movement of the elevating frame.

Each fixed frame may further have a support rib formed at the inner surface thereof and configured to support the elevating frame at a position at which the elevating frame is moved downward.

Each fixed frame may further have a sliding bar pivotably connected to an end of the mounting shaft portion having passed through the horizontal guide slot, the sliding bar being slidably mounted to an outer surface of the fixed frame.

A tensile spring may be connected between one end of the sliding bar and the outer side surface of the fixed fame and serve to apply elastic force forward to the pivot shaft portion so as to maintain the support bar at an upwardly moved position thereof.

Components to support the elevating frame in a vertically movable manner, for example, the fixed frames and the support bars may be symmetrically arranged in both sides of the storage compartment.

The refrigerator may further include a drawer configured to be pushed into or pulled out of the elevating frame. The drawer may be configured to be pushed into or pulled out of a chiller chamber, the chiller chamber being a storage space defined inside the elevating frame.

The drawer may include a guide rib protruding from an outer side surface thereof, and the elevating frame may further include a guide groove formed in an inner surface of each sidewall plate portion such that the guide rib of the drawer is inserted into and guide by the guide groove.

The guide groove may be inclined so as to be reduced in height rearward.

The guide groove may be provided at a front end thereof with a stepped portion, and the guide rib may be provided at a rear lower portion thereof with a protruding stopper so as to be caught by the stepped portion when the drawer is pulled out, which may limit a distance that the drawer can be pulled out.

The elevating frame may further include a shelf panel mounted between upper ends of the sidewall plate portions.

The shelf panel may internally define a space, and a cold storage material including a phase change material may be injected into the space.

The freezing compartment may further include a freezing compartment door configured to open or close a front opening thereof, and the freezing compartment door may be pivotably mounted to a door frame, the door frame being mounted to an upper end of a front surface of the respective sidewall plate portions.

The fixed frames may further include a pivoting cover vertically pivotably mounted to upper ends thereof so as to open or close a front opening between a lower end of the freezing compartment door and the shelf panel when the elevating frame is moved downward.

The evaporator may include a refrigerant pipe arranged between two plates forming a wall surface of the freezing compartment.

The evaporator may include an upper surface portion, a left side surface portion, a right side surface portion, a rear surface portion, and a lower surface portion respectively forming an upper surface, a left side surface, a right side surface, a rear surface, and a lower surface of the freezing compartment.

The evaporator may further include a pair of extensions extending downward from lower ends of the left side surface portion and the right side surface portion.

Each fixed frame may further include a drain groove formed in an upper surface thereof and configured to receive defrosting water generated on the evaporator.

Each extension of the evaporator may have a lower end located in the drain groove such that defrosting water flowing on an inner surface and an outer surface of the extension is introduced into the drain groove.

The drain groove of the fixed frame may have a bottom surface inclined so as to be reduced in height rearward.

The bottom plate portion of the elevating frame may have a bottom surface inclined rearward so as to be reduced in height rearward, and a drain groove may be formed in a rear end of the bottom plate portion so as to extend lengthwise in a left-and-right direction.

The drain groove may have an inclined bottom surface, and a drain hole may be formed at a lowermost position of the bottom surface.

A hose may be connected to guide movement of the defrosting water from the drain groove of the fixed frame to the drain groove of the elevating frame.

A water sump may be installed below the drain hole so as to receive water falling from the drain hole, thereby causing the water to pass through a rear wall of the cabinet.

The water sump may be mounted to a rear wall of the storage compartment, and may be located below the drain hole when the elevating frame is at a downwardly moved position, so as not to interfere with the drain hole.

It is to be understood that both the foregoing general description and the following detailed description of the present invention are exemplary and explanatory and are intended to provide further explanation of the present invention as claimed.

### BRIEF DESCRIPTION OF THE DRAWINGS

The accompanying drawings, which are included to provide a further understanding of the present invention and are incorporated in and constitute a part of this application, illustrate embodiment(s) of the present invention and together with the description serve to explain the principle of the present invention. In the drawings:
FIG. 1 is a perspective view illustrating a refrigerator according to one embodiment of the present invention;
FIG. 2 is a perspective view illustrating a freezing compartment assembly, viewed from the front upper side, according to one embodiment of the present invention;
FIG. 3 is a perspective view illustrating the freezing compartment assembly of FIG. 2, viewed from the front lower side;
FIG. 4 is a perspective view illustrating the freezing compartment assembly of FIG. 2, viewed from the rear upper side;
FIG. 5 is an exploded perspective view of the freezing compartment assembly of FIG. 2;
FIG. 6 is a through view of the freezing compartment assembly of FIG. 2, illustrating a shelf mounted to an elevating frame so as to be pulled out or pushed into the elevating frame;
FIG. 7 is a front perspective view illustrating the layout of refrigerant pipes in an evaporator according to one embodiment of the present invention;
FIG. 8 is a conceptual view schematically illustrating the flow of refrigerant in the evaporator of FIG. 7;
FIG. 9 is a bottom perspective view and a side sectional view illustrating a state in which an elevating frame is at a downwardly moved position and a pivoting cover blocks the front of an increased freezing compartment space;
FIG. 10 is a bottom perspective view and a side sectional view illustrating a state in which the elevating frame is at a downwardly moved position and the pivoting cover is pivotably rotated and pushed inward to open the front of the increased freezing compartment space;
FIG. 11 is a bottom perspective view and a side sectional view illustrating an upwardly moved state of the elevating frame for comparison with the state of FIG. 10; and
FIG. 12 is a bottom perspective view illustrating the pulled-out state of a drawer for comparison with the state of FIG. 11.

### DETAILED DESCRIPTION OF THE INVENTION

Hereinafter, exemplary embodiments of the present invention will be described in detail with reference to the accompanying drawings.

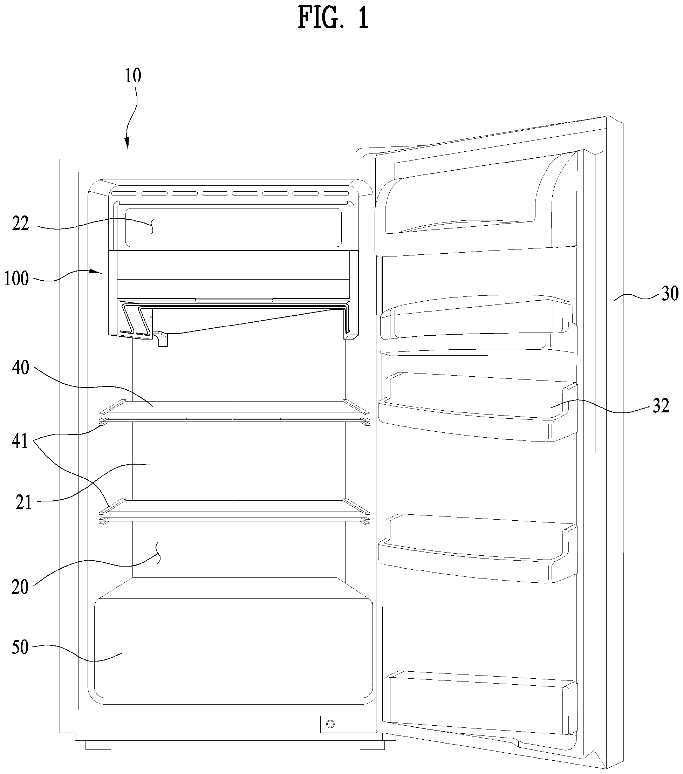

FIG. 1 is a perspective view illustrating a refrigerator according to one embodiment of the present invention.

The refrigerator according to one embodiment of the present invention includes a freezing compartment 22 and a refrigerating compartment 21, which constitute a storage compartment 20 inside a cabinet 10. That is, the storage compartment 20, which is a single storage region defined by the cabinet 10, is divided into the freezing compartment 22 and the refrigerating compartment 21. The freezing compartment 22 may be provided within a freezing compartment assembly 100. That is, the freezing compartment 22 may be separated from the refrigerating compartment 21 via the freezing compartment assembly 100 which is mounted in a partial region of the storage compartment 20.

A single door 30 may be pivotably mounted at one side of the cabinet 10 and serve to open or close the freezing compartment 22 and the refrigerating compartment 21. That is, by opening the single door 30, a user can access the freezing compartment 22 and the refrigerating compartment 21 in the storage compartment 20 which is a single storage region.

A plurality of baskets 32 having various shapes and sizes may be mounted to an inner surface of the door 30.

A shelf 40 may be provided in the refrigerating compartment 21, and the refrigerating compartment 21 may be divided into a plurality of sub storage regions via the shelf 40. That is, an upper region and a lower region may be separated from each other via one shelf. In general, the shelf 40 may be slidably supported by a shelf guide 41. As such, when at least a part of the shelf 40 is removed, at least a part of the upper region and the lower region may be merged. In this way, a container, which is taller than one sub storage region, may be stored in the refrigerating compartment 21.

A drawer 50 may be provided in the lower section of the refrigerating compartment 21. The drawer 50 may also constitute a part of the refrigerating compartment 21. The drawer 50 may be used to define a space isolated from the remaining region of the refrigerating compartment 21, in order to prevent moisture evaporation. For example, the drawer 50 may be used to store vegetables or fruits.

The freezing compartment 22 may be located in the upper section of the storage compartment 20 inside the cabinet 10.

The present example is intended to provide the refrigerator, which increases or decreases a space in the freezing compartment 22, i.e. the volume of the freezing compartment 22. That is, the present example is intended to provide the refrigerator, which increases the volume of the freezing compartment 22, beyond the basic volume of the freezing compartment 22, as needed. Such an increase in the volume of the freezing compartment 22 means a reduction in the volume of the refrigerating compartment 21. To this end, in the present example, the freezing compartment assembly 100 is provided, which varies the storage space in the freezing compartment 22, i.e. the volume of the freezing compartment 22. Specifically, this variation may be implemented via the upward/downward movement of a partition wall provided in the freezing compartment assembly 100.

The volume of the entire freezing compartment 22 may be changed by the partition wall which is vertically moved. In an example, the freezing compartment 22 may have the minimum basic volume at the highest position, i.e. the default position at which the partition wall is moved upward to the maximum extent. Then, the volume of the freezing compartment 22 may be increased as the partition wall is moved downward. Once the partition wall has been moved downward to the maximum extent, the volume of the freezing compartment 22 may be increased to the maximum extent. On the other hand, the volume of the refrigerating compartment 21 may be minimized.

In the freezing compartment 22, an upper space may be a fixed space and a lower space may be a variable space defined by the vertically moving partition wall. This case may correspond to a case where two partition walls are provided. That is, the space above a fixed partition wall may become a fixed freezing compartment space, and a variable freezing compartment space may be defined between the fixed partition wall and a vertically moving partition wall which is located below the fixed partition wall. For example, when the two partition walls are located so as to come into close contact with each other, the total space in the freezing compartment is minimized, and when the two partition walls are located farthest from each other, the variable space is maximized, i.e. the overall amount of space in the freezing compartment may become the maximum.

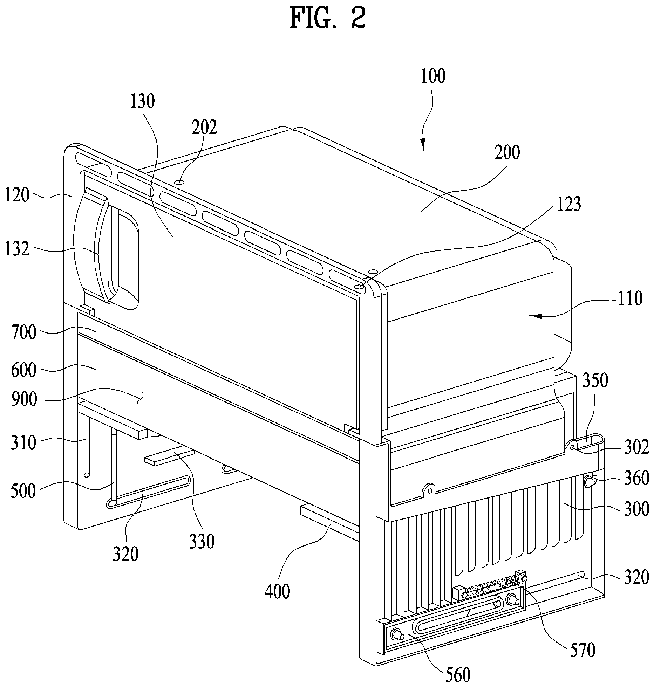

Hereinafter, the freezing compartment assembly 100 will be described in detail with reference to FIGs. 2 to 5. In the above description, for convenience of description, although a component, which separates the freezing compartment and the refrigerating compartment from each other, is named the partition wall, as will be described below, the partition wall may take the form of a singular component, or may take the form of plural components.

As described above, in the present example, the space or volume of the freezing compartment may vary. As such, the space or volume of the refrigerating compartment varies. For convenience, a description of the present example will be centered on the feature whereby the space or volume of the freezing compartment is varied. In addition, for convenience of description, a freezing compartment that is not expandable, i.e. a fixed or basic freezing compartment will be designated by reference numeral 110.

FIGs. 2 to 5 are respectively perspective views and an exploded perspective view of the freezing compartment assembly 100.

The freezing compartment 110, i.e. the basic freezing compartment 110 may define a cuboidal space, the front of which is open. Specifically, the basic freezing compartment 110 may be provided in a space inside an evaporator 200 which takes the form of a cuboid having an open front side. The freezing compartment 110, provided in the inner space defined by the evaporator 200, may be referred to as a freezing space having a fixed size. In this case, although will be described below, both side surfaces and top and bottom surfaces of the freezing compartment 110 may be formed by the evaporator 200, and a rear surface of the freezing compartment 110 may also be formed by the evaporator 200. In addition, although the lower surface of the freezing compartment 110 may be formed by the evaporator 200, the lower surface of the freezing compartment 110 may be formed by any other component, instead of the evaporator 200.

A pair of fixed frames 300 may be installed underneath the freezing compartment 110. The fixed frames 300 are fixed to both sidewalls of the storage compartment.

Each of the fixed frames 300 may have at least two fastening holes 302, so as to be fastened and fixed to an inner side wall of the storage compartment via fastening members such as, for example, screws.

An elevating frame 400 may be provided between the fixed frames 300. In conclusion, the freezing compartment space will increase as the elevating frame 400 is moved downward. As it will be described below, the elevating frame 400 defines a storage space therein. The storage space may be an additional storage space provided between the freezing compartment and the refrigerating compartment. That is, the storage space may be maintained at a low temperature that falls in an intermediate range between the respective temperatures of the freezing compartment and the refrigerating compartment, and may be referred to as a chiller chamber.

The evaporator 200 may be fabricated by laying a refrigerant pipe between two metal plates and fusing the two plates to each other.

Although the evaporator 200 may be installed so as to be supported by the fixed frames 300 which are installed to both sidewalls of the storage compartment, the evaporator 200 may have at least two screwing holes 202 so as to be fastened to the ceiling surface and side surfaces of the storage compartment.

The freezing compartment 110 may generally have a cuboidal shape, and the evaporator 200 may have five surfaces, i.e. the fix surfaces of a cuboid excluding a front surface thereof.

A freezing compartment door 130 may be pivotably mounted to the front side of the freezing compartment 110. That is, in order to prevent cold air, inside the freezing compartment 110 of the storage compartment 20, from entering the refrigerating compartment 21, the freezing compartment door 130 may be provided. Of course, the freezing compartment door 130 may be a door that may be operated after the main door 20 described above is opened.

For the mounting of the freezing compartment door 130, and consequently, for the opening/closing of the freezing compartment 110, a door frame 120 may be provided at the front surface of the evaporator 200. In addition, pivot shafts 123 may be provided at upper and lower ends of one side (e.g. the right side) of the door frame 120.

A handle 132 may be provided at the other side (e.g. the left side) of the freezing compartment door 130. The handle 132 may include a portion protruding from a front surface of the freezing compartment door 130 and a recess indented in the front surface. With the above-described configuration of the freezing compartment 110 and the freezing compartment door 130, the basic freezing compartment 110 may be acquired. That is, the effect of realizing a dual door refrigerator (i.e. a refrigerator in which a refrigerating compartment and a freezing compartment are separated from each other by a thermal insulation wall and are opened or closed by respective doors) may be acquired using a single door refrigerator (i.e. a refrigerator in which a refrigerating compartment and a freezing compartment are not separated from each other by a thermal insulation wall).

The elevating frame 400 may be vertically moved by a pair of support bars 500, which are pivotably connected between the fixed frames 300. In addition, the elevating frame 400 may be supported by the support bars 500.

The support bars 500 may be arranged back and forth. Each support bar 500 may extend from one fixed frames 300 to the other fixed frames 300. As such, at least four support points may be formed in different respective directions of the elevating frame 400 via the support bars 500.

In this way, the vertical movement of the elevating frame 400 may be very stably performed, and the elevating frame 400 may be supported.

The support bars 500 are required to support the weight of the elevating frame 400 and stored items, and thus, may be formed of metal wires so as to achieve the sufficient strength thereof.

The elevating frame 400 may include a bottom plate portion 420. When the bottom plate portion 420 is moved downward, it may be said that, on the basis of the bottom plate portion 420, an upper space is expanded and a lower space is contracted. That is, it may be said that a freezing compartment region is expanded and a refrigerating compartment region is contracted.

The elevating frame 400 may include a pair of sidewall plate portions 430, which extend upward from both side ends of the bottom plate portion 420. An additional storage space may be defined between the fixed freezing compartment 110, the bottom plate portion 420, and the sidewall plate portions 430. The storage space may be a chiller chamber 900. When the chiller chamber 900 defined by the elevating frame 400 is moved downward, the freezing space is increased. That is, although the simple vertical movement of the bottom plate portion 420 may be considered to vary the volume of the upper space and the lower space using a partition wall, the vertical movement of the chiller chamber 900 may be considered to vary the volume of the upper space and the lower space using a partition space.

In either case, it may be said that, when the elevating frame 400 is moved downward, the size of the variable freezing space is increased, and that, when the elevating frame 400 is moved upward, the size of the variable freezing space is reduced, and correspondingly, a space in the refrigerating compartment 21 is increased.

Specifically, the support bars 500 may be pivotably mounted to a lower surface of the bottom plate portion 420 of the elevating frame 400 via bearings 540.

Each of the support bars 500 may include a pivot shaft portion 510 rotatably mounted to the elevating frame 400, support shaft portions 520 bent from both ends of the pivot shaft portion 510, and mounting portions 530 bent from lower ends of the support shaft portions 520 so as to extend toward the fixed frames 300. The pivot shaft portion 510 may be referred to as a horizontal shaft portion, and the support shaft portions 520 may be referred to as vertical shaft portions.

When an angle between the support shaft portion 520 and the bottom plate portion 420 is 90 degrees, the bottom plate portion 420 is located at the highest position at which it is moved upward to the maximum extent. In addition, the smaller the angle between the support shaft portion 520 and the bottom plate portion 420, the lower the height of the bottom plate portion 420.

Each bearing 540 serves to horizontally mount the pivot shaft portion 510. The bearing 540 may be fastened and fixed to the lower surface of the bottom plate portion 420 via two screws. As such, it may be said that the bottom plate portion 420 is put on two wires which are spaced apart from each other in the front-and-rear direction and extend in the left-and-right direction. In addition, the bearing 540 may also serve to maintain the two pivot shaft portions 510 at a fixed front-and-rear distance.

The support bars 500 may be linked to each other. That is, the pivot shaft portions 510, which face each other at the front and rear sides of the elevating frame 400, may be rotated together. Specifically, all angles between the bottom plate portion 420 and the four support shaft portions 520 located on all sides of the bottom plate portion 420 may vary in the same manner. This is because it is desirable to allow the bottom plate portion 420 to be moved vertically while remaining horizontal.

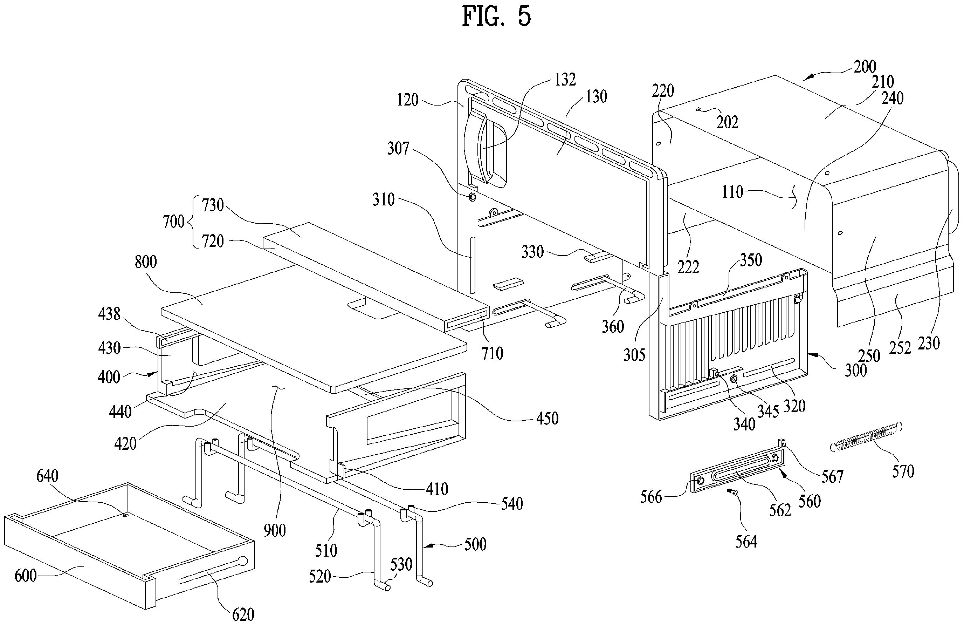

As exemplarily illustrated in FIG. 5, the support bars 500 are connected to each other by a pair of left and right sliding bars 560. As such, the support bars 500 may be operated only when the sliding bars 560 are equally moved at the same time. That is, the bottom plate portion 420 may be vertically moved via back and forth movement of the sliding bars 560.

Specifically, each fixed frame may have horizontal guide slots 320 formed in a lower portion thereof such that the two mounting shaft portions 530 are slidably inserted respectively. The horizontal guide slots 320 may be formed in the fixed frames 300 so as to extend in the front-and-rear direction. In addition, the horizontal guide slots 320 may be formed so as to allow penetration of the mounting shaft portions 530. As such, the mounting shaft portions 530 may slide back and forth along the horizontal guide slots 320.

The horizontal guide slots 320 may be formed in the lower portion of the fixed frames 300. In addition, there horizontal guide slots 320 may be two front and rear horizontal guide slots. The mounting shaft portion 530 of the front support bar 500 may slide in the front horizontal guide slot 320, and the mounting shaft portion 530 of the rear support bar 500 may slide in the rear horizontal guide slot 320.

The horizontal guide slots 320 may be formed respectively in both the fixed frames 300.

A length of each horizontal guide slot 320 may be determined in consideration of a length of the support shaft portion 520 of the support bar 500, a distance between the two pivot shaft portions 510, and a pivoting angle of the support bar 500 upon downward movement. For example, increasing the length of the horizontal guide slot 320 means that an angle between the bottom plate portion 420 and the support shaft portion 520 may be additionally reduced.

As described above, when the angle is 90 degrees, the bottom plate portion 420 may be at the highest position (a first position of the elevating frame) at which it is moved upward to the maximum extent. The bottom plate portion 420 is gradually moved downward as the angle is gradually reduced. At this time, the minimum angle may be 20 degrees or more. This is because it is very difficult to move the bottom plate portion 420 upward by applying force in the horizontal direction when the minimum angle is reduced to be less than 20 degrees. Accordingly, the length of the horizontal guide slot 320 may be determined such that the mounting shaft portion 530 is no longer moved when the angle reaches a predetermined minimum angle (a second position of the elevating frame). It is therefore be understood that the elevating frame is movable between a first position and a second position defining an expanded freezing compartment.

The sliding bars 560 may be provided at the respective fixed frames 300. The mounting shaft portion 530, having passed through the horizontal guide slot 320, may be connected to the sliding bar 560. The sliding bar 560 may be slidably mounted to an outer surface of the fixed frames 300. One sliding bar 560, i.e. the sliding bar 560 located at one side may be connected at front and rear ends thereof to the respective mounting shaft portions 530 so as to allow rotation of the mounting shaft portions 530.

The fixed frames 300 may be provided with a boss 345 at the center of a lower portion of the outer surface thereof, i.e. at a position between the two horizontal guide grooves 320, and the sliding bar 560 may be slidably mounted to the boss 345 as a screw 564 is fastened from the outer surface of the fixed frames 300 through an elongated hole 562 perforated in the sliding bar 560.

The sliding bar 560 may have shaft holes 566 at left and right sides of the elongated hole 562 such that the mounting shaft portions 530 are pivotably inserted into the shaft holes 566.

The sliding bar 560 may slide while being supported at three points by the screw 564, which is fastened through the elongated hole 562, and the two mounting shaft portions 530 which are inserted into the two shaft holes 566 and supported by the horizontal guide grooves 320. This is because the mounting shaft portions 530 are basically slidably supported by the horizontal guide grooves 320 of the fixed frames 300.

The sliding bars 560 may prevent the elevating frame 400 from tilting back and forth by allowing pivoting of the two support bars 500 to be synchronized such that the two support bars 500 pivot at the same angle.

In addition, the fixed frames 300 may further include vertical guide grooves 310 formed in a front portion of an inner surface thereof respectively. The elevating frame 400 may further include guide protrusions 410, which protrude from outer side surfaces thereof and are inserted into the respective vertical guide grooves 310 so as to be vertically moved.

The vertical guide grooves 310 may be vertically elongated in the front portion of the inner surface of the respective fixed frames 300, and the guide protrusions 410 may protrude laterally from the outer side surfaces of the elevating frame 400.

Although the support bars 500 are pivotably mounted to the elevating frame 400 and support the elevating frame 400, the provision of the pivoting support bars 500 may cause the elevating frame 400 to pivot, and thus, there is the possibility that the elevating frame 400 may be moved forward or rearward during vertical movement thereof. However, since the guide protrusions 410 of the elevating frame 400 are inserted into the vertical guide grooves 310 in the fixed frames 300 and are guided to be moved only in the vertical direction, the elevating frame 400 may be moved only in the vertical direction while remaining horizontal even when the support bars 500 pivot so as to move the elevating frame 400 vertically.

The fixed frames 300 may further include support ribs 330, which are formed at inner surfaces of the fixed frames 300 and serve to support the elevating frame 400 at a downwardly moved position thereof. That is, the support ribs 330 may support the bottom plate portion 420 when the bottom plate portion 420 is moved downward to the maximum extent.

Two support ribs 330 may protrude from an inner side surface of each fixed frames 300 so as to support the elevating frame 400 at the downwardly moved position thereof.

In a case where the support ribs 330 protrude to an excessively long length, the support ribs 300 are at risk of interfering with objects received in the refrigerating compartment 21. Therefore, the support ribs 330 may be formed to have a thickness and length suitable for achieving a desired strength.

Meanwhile, a tensile spring 570 may be connected between one end of the sliding bar 560 and the outer side surface of the fixed frames 300.

One end of the tensile spring 570 may be connected to a spring mounting protrusion 340 formed at the outer side surface of the fixed frames 300, and the other end of the tensile spring 570 may be connected to one end of the sliding bar 560, for example, a spring mounting protrusion 567 which protrudes upward from a rear end of an upper surface of the sliding bar 560.

As exemplarily illustrated in FIGs. 2 to 4, even while the elevating frame 400 is at the upwardly moved position, the tensile spring 570 applies elastic force required to pull the sliding bar 560 forward.

That is, as the mounting shaft portions 530 are inserted into the two shaft holes 566 of the sliding bar 560, the tensile spring 570 applies elastic force to the mounting shaft portions 530 forward.

As such, even if the support bars 550 are slightly pushed or receive shocks in a state in which the support shaft portions 520 of the support bars 550 are substantially upright, the support bars 500 may not easily pivot and remain to support the elevating frame 400.

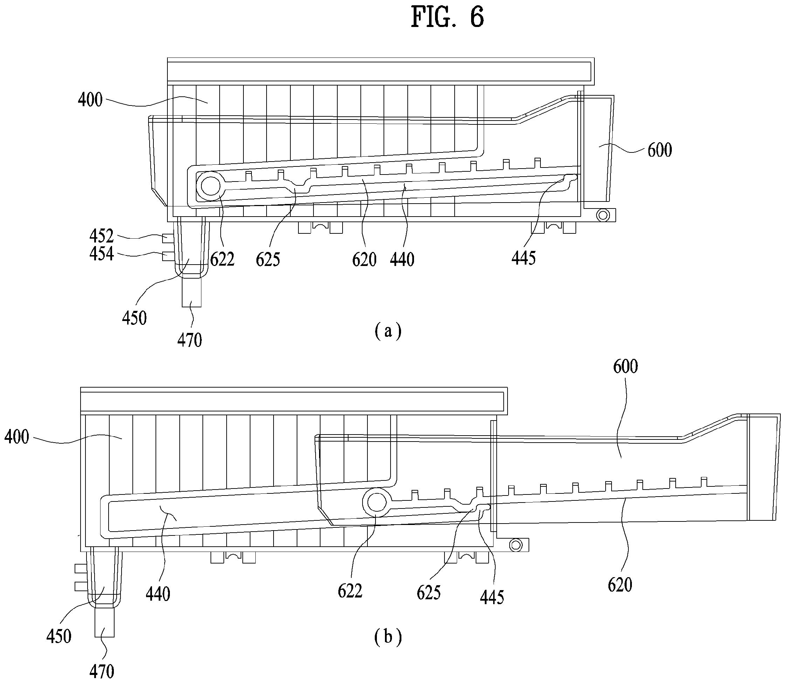

As exemplarily illustrated in FIGs. 5 and 6, the elevating frame 400 may define an additional storage space. That is, the chiller chamber 900 may be defined between the basic freezing compartment 110 and the refrigerating compartment 21. A drawer 600 may be mounted inside the elevating frame 400 so as to be pulled out. The user can use the chiller chamber 900 via the drawer 600.

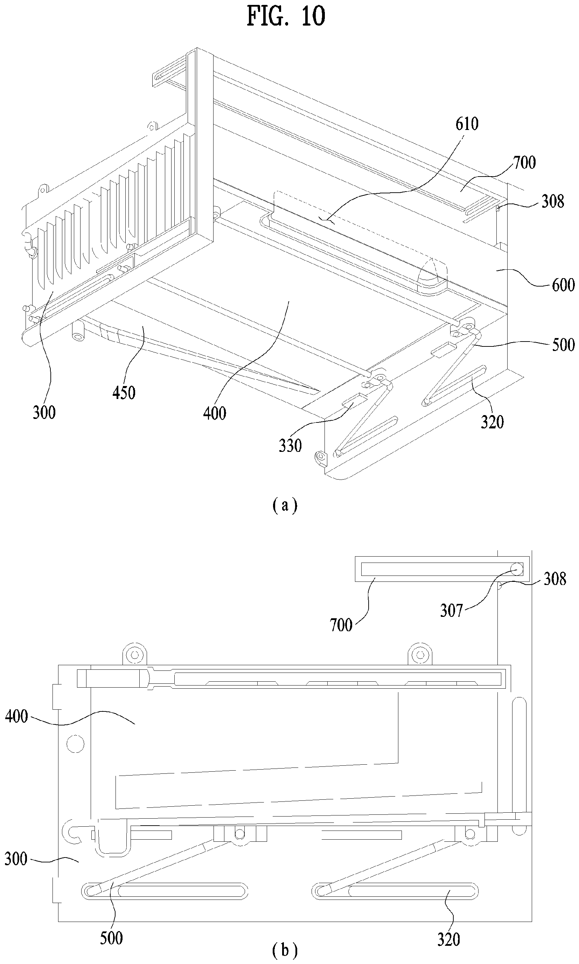

The drawer 600 may be provided with a grip recess (610, see FIG. 10) indented upward from a lower end of a front surface thereof.

The drawer 600 may include guide ribs 620 which protrude from outer side surfaces thereof, and the elevating frame 400 may further include guide grooves 440 which are formed in inner surfaces of the sidewall plate portions 430 and serve to guide the guide ribs 620 of the drawer 600 inserted thereinto.

The front surface of the drawer 600 may have a greater width than a width between both side surfaces of the drawer 600 and may be configured to close the open front side of the elevating frame 400 so as to define a hermetically sealed storage space.

The guide ribs 620 may be inclined so as to be gradually reduced in height rearward relative to a bottom surface of the drawer 600. Correspondingly, the guide grooves 440 may be inclined so as to be gradually reduced in height rearward. In this way, the user may smoothly push the drawer 600 inward with low force.

In addition, as exemplarily illustrated in FIG. 6, each guide groove 440 may be provided at a front end thereof with a stepped portion 445, and each guide rib 620 may be provided at a rear lower portion thereof with a protruding stopper 625.

The guide rib 620 may be integrally formed at a rear end thereof with a contact protrusion 622, which has a circular shape when viewed from the outer lateral side.

As such, a bottom surface of the guide groove 440 may come into contact with only lower surfaces of the circular contact protrusion 622 and the protruding stopper 625, rather than coming into contact with the entire lower surface of the guide rib 620. This may reduce a sliding contact area between the guide rib 620 and the guide groove 440, which may reduce friction and ensure smooth sliding.

When the user pulls the drawer 600 out, the drawer 600 is pulled out only until the protruding stopper 625 is caught by the stepped portion 445, which may limit the length of the drawer 600 that the drawer 600 can be pulled out to the maximum extent.

At any time while the drawer 600 is being pulled out, the contact protrusion 622, which has been in contact with the lower surface of the guide groove 440, may come into contact with an upper surface of the guide groove 440 so as to slide on the upper surface. In this case, downward rotational moment is applied to a portion of the drawer 600 that is in front of the stepped portion 445.

When the drawer 600 is pulled out to the end, in particular, there is the risk of the drawer 600 falling out along with the items received therein. Therefore, by allowing the protruding stopper 625 to be caught by the stepped portion 445, the distance that the drawer 600 can be pulled out is limited, which may ensure that the drawer 600 is stably supported by the guide groove 440 and may prevent the drawer 600 from falling out.

When it is desired to completely remove the drawer 600 for cleaning, etc., the drawer 600 may be completely separated from the elevating frame 400 by being pulled in a state in which the front half of the drawer 600 is lifted slightly.

Accordingly, with the present example, the elevating frame 400 enables the expansion of the freezing space as well as the formation of the chiller chamber 900. In conclusion, it can be appreciated that the freezing space may vary via vertical movement of the entire chiller chamber 900.

Meanwhile, the chiller chamber 900 should be isolated from the remainder of the space so as to define a somewhat hermetically sealed space. As described above, the front side of the chiller chamber 900 may be hermetically sealed by the front surface of the drawer 600. Hereinafter, a configuration of the chiller chamber 900 defined by the elevating frame 400 will be described in detail.

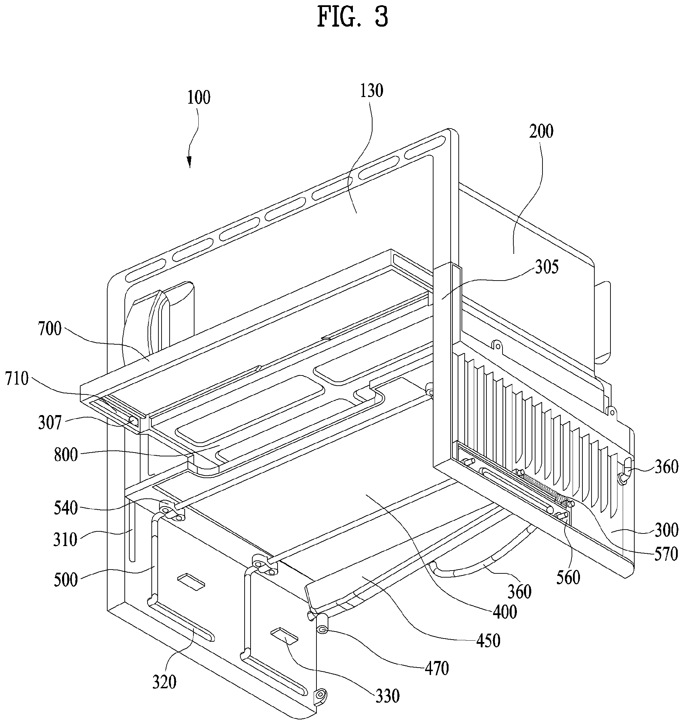

As exemplarily illustrated in FIGs. 3 and 5, the elevating frame 400 may further include a shelf panel 800 disposed on the sidewall plate portions 430. That is, the shelf panel 900 may be spaced upward apart from the bottom plate portion 420 by a predetermined distance. As such, the shelf panel 800 functions as an upper surface of the chiller chamber 900, and the bottom plate portion 420 functions as a lower surface of the chiller chamber 900.

In addition, the sidewall plate portions 430 may extend upward from both ends of the bottom plate portion 420 and be connected to the shelf panel 800. As such, the respective sidewall plate portions 430 function as both side surfaces of the chiller chamber 900. In addition, it will be appreciated that a rear surface of the chiller chamber 900 is formed by a rear wall of the storage space defined by the cabinet.

The shelf panel 800 is generally a rectangular panel having a prescribed thickness. To mount the shelf panel 800, panel mounting grooves 438 may be formed respectively in the top of the sidewall plate portions 430.

The shelf panel 800 may internally define a space and a cold storage material formed of a phase change material may be introduced into the space. That is, the shelf panel 800 may include a cold storage pack.

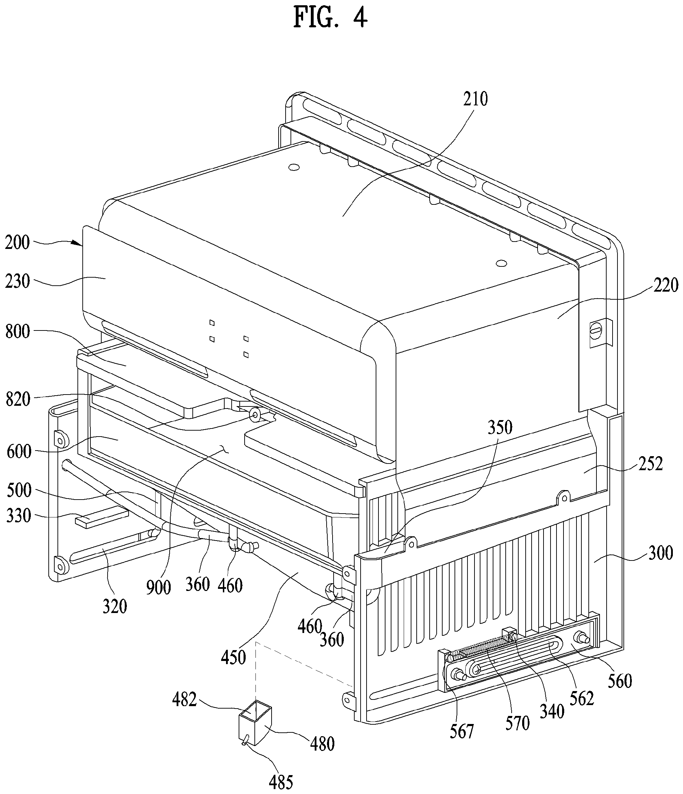

As exemplarily illustrated in FIG. 4, the shelf panel 800 may be provided at the rear center thereof with an injection port 820 to enable injection of the cold storage material.

The phase change material may be a material that cools the surrounding air by melting from a frozen solid into a liquid via heat exchange with the surrounding air and that may have high heat of fusion. That is, the phase change material may be a material or a structure that is changed into a solid by absorbing cold air from the evaporator 200 in a normal state (i.e. when power is applied), and subsequently emits the absorbed cold air in an emergency state (i.e. a blackout). Accordingly, because a portion of the chiller chamber 900 is formed using the cold storage material, the chiller chamber 900 may be provided as a space that provides protection in the event of a blackout.

In one example, storage items, which must be continuously stored at a low temperature and which may easily spoil when the temperature rises, may be stored in the chiller chamber 900. This is because the temperature of the freezing compartment or the refrigerating compartment may increase relatively steeply in the event of a blackout. However, the chiller chamber 900 may perform a function of maintaining a somewhat low temperature even in a blackout because it is separated from the remainder of the storage space and is partially formed of the cold storage material.

Meanwhile, the shelf panel 800 may be provided to form the upper surface of the chiller chamber 900. In addition, the shelf panel 800 may be configured to come into contact with a lower surface portion 240 of the evaporator 200. That is, the shelf panel 800 may come into contact with the evaporator 200 at the underside of the lower portion 240. Of course, this state may be referred to as a state in which the elevating frame 400 is moved to the highest height.

Once the evaporator 200 and the shelf panel 800 come into contact with each other, the cold storage material may more effectively absorb cold air. Contrary, upon blackout, the cold storage material may effectively resupply the cold air to the evaporator 200. With this shelf panel 800, the supply of cold air is performed even upon a blackout, and an additional chiller chamber may be effectively implemented.

For example, as the entire storage compartment 200 inside the cabinet 10 is provided with the evaporator 200, i.e. a single cooler, the freezing compartment 110 may be kept within a temperature range from -18 °C to 9°C, the chiller chamber 900 may be kept within a temperature range from -1 °C to 8 °C, and the refrigerating compartment 21 may be kept within a temperature range from 1 °C to 4 °C.

Meanwhile, as exemplarily illustrated in FIG. 2, the freezing compartment door 130 may be pivotably mounted to a front opening of the freezing compartment 110.

To this end, the door frame 120 may be fastened to the front rim portion of the evaporator 200.

As exemplarily illustrated in FIG. 4, the door frame 120 may be provided at side surfaces thereof with fastening holes for screwing with the evaporator 200.

The door frame 120 may be supported by upper ends of the sidewall plate portions 430, and a front surface of the door frame 120 may define the same plane as front surfaces of the sidewall plate portions 430.

The door frame 120 may extend rearward so as to surround the front rim portion of the evaporator 200, the pivot shafts 123 of the freezing compartment door 130 may be inserted into upper and lower portions of the right side of the extended portion of the door frame 120.

Meanwhile, at the lowest position at which the elevating plate 400 is moved downward to the maximum extent, an expanded freezing compartment may be defined above the elevating frame 400. The expanded freezing compartment may be separated from the remaining storage space. That is, the expanded freezing compartment may be formed as a hermetically sealed storage space.

Hereinafter, a configuration of the expanded freezing compartment will be described in detail.

A pivoting cover 700 may be mounted to an upper end of the fixed frames 300 so as be vertically pivotable, and may close a front opening of the expanded freezing compartment when the elevating frame 400 is moved downward. That is, the pivoting cover 700 may be mounted to both the fixed frames 300.

Specifically, the pivoting cover 700 may be provided to the front opening between a lower end of the freezing compartment door 130 and the shelf panel 800.

As exemplarily illustrated in FIG. 3, the pivoting cover 700 may be pivotably and slidably mounted to pivot shafts 307, which are provided at extensions 305 extending upward from an upper surface of the front end of the respective sidewall plate portions 430. To this end, the pivoting cover 700 may be provided at both side surfaces thereof with pivot shaft recesses 710, into which the pivot shafts 307 are slidably inserted.

As exemplarily illustrated in FIG. 5, the pivoting cover 700 may include a front surface portion 720 configured to cover a front surface of the shelf panel 800 when the elevating frame 400 is moved upward, and an upper surface portion 730 configured to cover a front opening between a lower end of the freezing compartment door 130 and the shelf panel 800 when the elevating frame 400 is moved downward.

The pivoting cover 700 may slide rearward in the horizontal state when the elevating frame 400 is moved upward. Thereafter, the front surface portion 720 of the pivoting cover 700 may cover a front surface of the shelf panel 800, and thus prevent deterioration in aesthetic external appearance caused when the shelf panel 800 is exposed.

In addition, the pivoting cover 700 may slide forward in the horizontal state when the elevating frame 400 is moved downward. Thereafter, the pivoting cover 700 may be rotated downward by the weight thereof. With this rotation, the pivoting cover 700 may cover the front opening between the lower end of the freezing compartment door 130 and the shelf panel 800, thereby hermetically sealing the expanded freezing compartment so as to be separated from the refrigerating compartment 21 and the basic freezing compartment 110.

Accordingly, an upper surface of the expanded freezing compartment may be formed by the upper surface portion 210 of the evaporator 200, and a lower surface of the expanded freezing compartment may be formed by the shelf panel 800. Of course, a rear surface of the expanded freezing compartment may be formed by the rear wall of the cabinet. Accordingly, the expanded freezing compartment may be referred to as a storage space into which cold air is directly supplied by the evaporator 200. In addition, the expanded freezing compartment may be referred to as a storage space into which cold air is directly supplied by the cold storage material.

Meanwhile, both side surfaces of the expanded freezing compartment may be formed by the evaporator 200. Accordingly, at least three surfaces of the expanded freezing compartment may be surfaces to which cold air is directly supplied from the evaporator 200. In addition, at least one surface of the expanded freezing compartment may be a surface to which cold air is directly supplied from the cold storage material. Accordingly, instead of a general evaporator configuration, a new evaporator configuration may be provided.

The elevating frame 400 described above is configured to be moved upward or downward relative to the fixed frames 300. Refrigerators are characterized in that ice or frost may be generated after moisture condenses near the freezing compartment. This ice or frost may restrict the vertical movement of the elevating frame 400. Thus, there is a demand for a new evaporator configuration or a new configuration to prevent the generation of ice or frost.

Hereinafter, in addition to a new evaporator configuration, a configuration to effectively remove defrosting water generated on the evaporator 200 will be described in detail. The evaporator configuration and the defrosting water removal configuration may be implemented in the freezing compartment assembly 100 according to the present exemplary embodiment.

As exemplarily illustrated in FIG. 5, the evaporator 200 may include the upper surface portion 210, a left side surface portion 220, a rear side surface portion 230, a lower surface portion 240, and a right surface portion 250, which respectively form an upper surface, a left surface, a rear surface, a lower surface, a right surface, and an upper surface of the freezing compartment 110. Accordingly, it will be appreciated that at least five surfaces of the freezing compartment 110 may be formed by the evaporator 200.

The evaporator 200 may further include a pair of extensions 222 and 252, which extend downward from lower ends of the left side surface portion 220 and the right surface portion 250. The extensions 222 and 252 may correspond to a left surface and a right surface of the chiller chamber 900. As such, the chiller chamber 900 is surrounded by the lower surface portion 240 and the extensions 222 and 252 of the evaporator 200. In this way, it is possible to very effectively cool the interior of the chiller chamber 900.

Meanwhile, the extensions 222 and 252 may form a left surface and a right surface of the expanded freezing compartment when the chiller chamber 900 is moved downward, i.e. when the freezing compartment is expanded. Accordingly, even the interior of the expanded freezing compartment may be effectively cooled. This is because, at this time, the extensions 222 and 252 may directly cool the expanded freezing compartment.

The evaporator 200 may cool air inside the freezing compartment 110 defined therein, and the lower surface portion 240 and the extensions 222 and 252 cool air below the lower surface portion 240. In this way, cold air may also be effectively supplied into the refrigerating compartment.

A detailed configuration of the evaporator 200 and the flow of refrigerant will be described below.

As exemplarily illustrated in FIGs. 2 and 4, each fixed frames 300 may further include a drain groove 350, which is formed in an upper surface of the fixed frames 300 and accommodates defrosting water generated from the evaporator 200. The drain groove 350 may serve to remove defrosting water as soon as the defrosting water is generated on the evaporator 200.

Ice may be generated between peripheral components when the defrosting water is not removed and thus freezes, thereby constraining the components. As described above, when ice is generated between the elevating frame 400 and the evaporator 200, movement of the elevating frame 400 may be limited. Thus, the user cannot easily vary the freezing space. In addition, when the user attempts to vary the freezing space by force, there is the risk of damage to, for example, the evaporator 200 or the elevating frame 400. Accordingly, it will be appreciated that the removal of defrosting water is very important in regard to vertical movement of the elevating frame 400.

In the present example, defrosting water generated from the evaporator 200 may be very effectively removed. In particular, this very effective removal of defrosting water may be accomplished by allowing the defrosting water to flow down along the extensions 222 and 252 which take the form of plates extending downward from the left and right sides of the evaporator 200.

In particular, lower ends of the extensions 222 and 252 of the evaporator 200 may be located inside the drain grooves 350 so that the defrosting water flowing on inner and outer surfaces of the extensions 222 and 252 is introduced into the drain grooves 350. That is, the extensions 222 and 252 may extend to central portions of the drain grooves 350, rather than coming into contact with sidewalls of the drain grooves 350. In this way, the defrosting water flowing on the inner and outer surfaces of the extensions 222 and 252 may be effectively introduced only into the drain grooves 350, without a risk of flowing out of the drain grooves 350.

The drain grooves 350 may be elongated in the front-and-rear direction on the top of the fixed frames 300, and may have a prescribed width in the left-and-right direction.

Since the lower ends of the extensions 222 and 252 are mounted so as to be located at the center of the drain grooves 350, the defrosting water flowing on outer side surfaces of the evaporator 200 as well as the defrosting water flowing on a lower surface of the lower surface portion 240 and inner side surfaces of the extensions 222 and 252 may be introduced into the drain grooves 350.

In addition, the lower surface of the lower surface portion 240 of the evaporator 200 may have a higher central portion and may be gradually reduced in height leftward and rightward.

As such, the defrosting water generated on the lower surface of the lower surface portion 240 may also smoothly flow to the extensions 222 and 252.

The bottom of the drain groove 350 of the fixed frames 300 may be inclined so as to be gradually reduced in height rearward.

Consequently, the defrosting water introduced into the drain groove 350 may flow to a rear end of the drain groove 350 so as to be discharged through a drain hole 470 which is formed at the lowermost position.

As exemplarily illustrated in FIGs. 3 to 5, the bottom plate portion 420 of the elevating frame 400 may be inclined such that a bottom surface thereof is gradually reduced in height rearward, and a drain groove 450 may be formed in a lower end of the bottom plate portion 420 so as to extend lengthwise in the left-and-right direction. The drain groove 450 is formed in the elevating frame 400, and thus differs from the drain groove 350 formed in the fixed frames 300 described above. The drain groove 450 may be referred to as a rear drain groove, and the drain groove 350 may be referred to as a lateral drain groove.

The shelf panel 800 may also cause the generation of defrosting water because it cools the surrounding air to a temperature below zero degrees via the cold storage material introduced therein. When the defrosting water changes into ice, there is the risk of the shelf panel 800 becoming stuck to the evaporator 200. The shelf panel 800 is required to be moved downward from the evaporator 200 in order to expand the freezing space. Thus, expansion of the freezing space may be limited by the defrosting water.

The defrosting water generated on the shelf panel 800 falls onto the bottom plate portion 420 of the elevating frame 400. The fallen defrosting water will flow rearward because the bottom surface of the bottom plate portion 420 is inclined rearward.

Since the drain groove 450 is formed at the rear end of the bottom plate portion 420 to extend lengthwise in the left-and-right direction, the defrosting water on the bottom surface may be introduced into the drain groove 450.

The drain groove 450 may have an inclined bottom surface, and the drain hole 470 may be formed at the lowermost position of the bottom surface.

The drain groove 450 may be inclined so as to be gradually reduced in height leftward when viewed from the front side as in FIG. 3.

Meanwhile, as described above, when the drawer 600 is mounted to the elevating frame 400, the defrosting water falls from the shelf panel 800 to the drawer 600.

As such, the drawer 600 may have a drain hole 640 formed in a bottom surface thereof.

The drain hole 640 may be formed at a position corresponding to the drain hole 470 of the bottom plate portion 420.

The bottom surface of the drawer 600 may be inclined to allow the defrosting water to flow to the drain hole 640.

The defrosting water that falls to the drawer 600 flows to the drain hole 640, thereby falling to the drain groove 450 of the bottom plate portion 420, and subsequently falling through the drain hole 470.

A hose 360 may be connected to allow the defrosting water to move from the drain groove 350 of the fixed frames 300 to the drain groove 450 of the elevating frame 400.

The hose 360 may be formed of a synthetic resin material so as to be flexible because the elevating frame 400 is vertically moved relative to the fixed frames 300.

A distance between both connection ends of the hose 360 may become farthest when the elevating frame 400 is moved downward, and a length of the hose 360 may be slightly longer than the farthest distance.

Since the hose 360 is stretchable, the drain groove 450 in the elevating frame 400 may be provided at a rear surface thereof with a hook 460 such that the hose 360 is hung and fixed to the hook 460.

A water sump 480 may be installed below the drain hole 470 and may receive water from the drain hole 470 to allow the water to pass through the rear wall of the cabinet 10.

The water sump 480, as exemplarily illustrated in FIG. 4, may include a top opening 482 and an extension tube 485 which extends rearward and downward from a rear wall thereof so as to penetrate the rear wall of the cabinet 10.

The top opening 482 may have a prescribed area or more to ensure that all of the water falling from the drain hole 470 is introduced into the top opening 482 even when the elevating frame 400 is at the upwardly moved position.

The water sump 480 is mounted inside the rear wall of the storage compartment of the cabinet 10, and even when the elevating frame 400 is at the downwardly moved position, the water sump 480 may be located below the drain hole 470 so as not to interfere with the drain hole 470.

A lower end of the drain hole 470 may be introduced into the opening 482 so long as the drain hole 470 and the water sump 480 do not interfere with each other.

Next, a detailed configuration of the direct cooling type evaporator, which may be applied to the exemplary embodiments of the present invention, will be described.

As exemplarily illustrated in FIGs. 5, 7 and 8, the evaporator 200 includes the lower surface portion 240, the rear surface portion 230 bent from a rear end of the lower surface portion 240, the upper surface portion 210 bent from an upper end of the rear surface portion 230, the left side surface portion 220 bent from a left end of the upper surface portion 210, and the right side surface portion 250 bent from a right end of the upper surface portion 210.

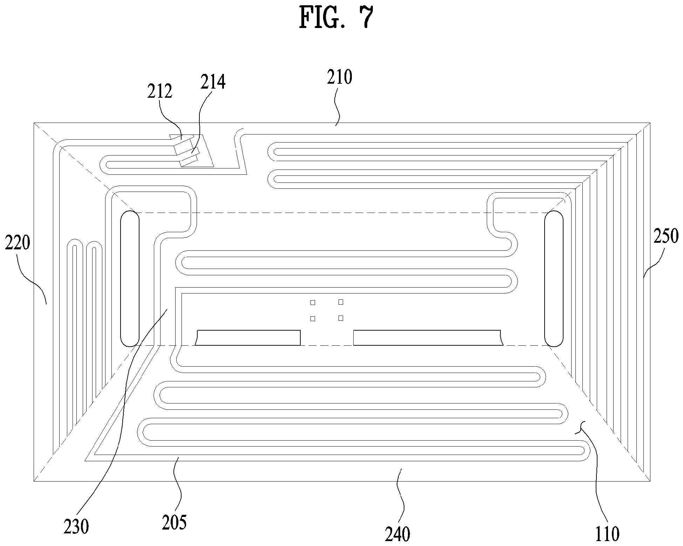

FIG. 7 is a perspective view illustrating the freezing compartment 110 defined in the evaporator 200 of FIG. 5, viewed from the front side.

The evaporator 200 may be a cuboid consisting of an open front surface, the upper surface portion 210, the left side surface portion 220, the rear surface portion 230, the lower surface portion 240, and the right side surface portion 250.

The rear surface portion 230 is connected to the upper surface portion 210, the left side surface portion 220, the lower surface portion 240, and the right side surface portion 250, and bent portions are shown by dotted lines in FIG. 7.

On the other hand, provided between the lower surface portion 240 and the left side surface portion 220 and between the lower surface portion 240 and the right side surface portion 250 are welds for the connection of separate plates, rather than bent portions being provided therebetween. In FIG. 7, corners thereof are shown by solid lines.

The evaporator 200, which may be applied to the exemplary embodiments of the present invention, is fabricated by inserting a refrigerant pipe between two metal plates and fusing the metal plates to each other.

Thus, the fabricated evaporator 200 takes the form of a plate having a prescribed plane shape as the refrigerant pipe is appropriately arranged between the two metal plates and the two metal plates are fused to each other.

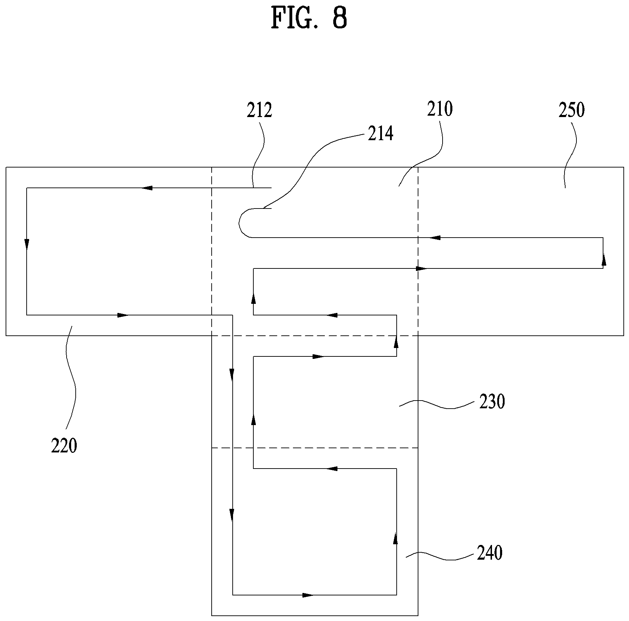

The evaporator 200 may be formed into a plate having a shape as shown in the planar figure of FIG. 8.

The left side surface portion 220 and the right side surface portion 250 may be connected to the left and right sides of the upper surface portion 210, the rear surface portion 230 may be connected to the underside of the upper surface portion 210, and the lower surface portion 240 may be connected to the underside of the rear surface portion 230.

The evaporator 200 may further include the extensions 222 and 252, which extend downward from the lower surface portion 240 from lower ends of the left side surface portion 220 and the right side surface portion 250.

In FIG. 8, the rear surface portion 230 is folded from a rear end of the lower surface portion 240 so as to form the rear surface, and the upper surface portion 210 is folded from an upper end of the rear surface portion 230 so as to form the upper surface.

The left side surface portion 220 and the right side surface portion 250 are folded from left and right side ends of the upper surface portion 210 so as to form the left side surface and the right side surface. A vertical length of the folded left and right side surface portions 220 and 230 is greater than a height of the rear surface portion 230.

As such, the extensions 222 and 252 are formed as the left side surface portion 220 and the right side surface portion 250 extend further downward than the lower surface portion 240 due to the fact that the height thereof is longer than the height of the rear surface portion 230.

As exemplarily illustrated in FIG. 7, the evaporator 200 may have a refrigerant inlet 212 and a refrigerant outlet 214 formed in the upper surface portion 210.

A portion of the upper surface portion 210, in which the refrigerant inlet 212 and the refrigerant outlet 214 are present, may be cut into a " 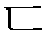 "-shaped portion and be bent upward.

As such, the refrigerant inlet 212 and the refrigerant outlet 214 may be connected to a refrigerant pipe located at the outside of the evaporator 200.

The refrigerant pipe inside the evaporator 200 may be arranged in such a way that refrigerant moves from the refrigerant inlet 212 in the upper surface portion 210 to the left side surface portion 220, subsequently moves to the rear surface portion 230 and the lower surface portion 240 by way of the upper surface portion 210, returns to the upper surface portion 230 and the upper surface portion 210, moves from the upper surface portion 210 to the right side surface portion 250, and finally moves to the refrigerant outlet 214 in the upper surface portion 210.

FIG. 7 illustrates an example in which the refrigerant pipe is arranged at five wall surfaces of the evaporator 200, and the planar figure of FIG. 8 schematically illustrates the flow of refrigerant between the five wall surfaces. Of course, the left and right wall surfaces may include the left side surface portion 220 and the right side surface portion 250 described above.

In addition, the refrigerant pipe inside the evaporator 200 may be arranged such that the refrigerant moved from the lower surface portion 240 to the upper surface portion 210 reciprocates plural times between the upper surface portion 210 and the right side surface portion 250, and subsequently moves to the refrigerant outlet 214 of the upper surface portion 210.

Since both the refrigerant inlet 212 and the refrigerant outlet 214 are located at the upper surface portion 210, the refrigerant moved to the right side surface portion 250 is required to return to the refrigerant outlet 214 located at the upper surface portion 210.

As the refrigerant pipe is arranged to allow the refrigerant to reciprocate plural times between the upper surface portion 210 and the right side surface portion 250, which enables the efficient cooling of the evaporator 200.

In addition, unlike the illustration, the refrigerant pipe may be divided into two parts or three parts.

The lower surface portion 240 and the upper surface portion 210 are relatively large, and therefore are preferable as a location where the refrigerant pipe is divided into several parts.

Accordingly, the evaporator 200, which may be applied to the present exemplary embodiment, may be formed by folding a single plate having five surfaces. In addition, expanded left and right side surfaces portions may be integrally formed with the single plate. Of course, a continuous refrigerant flow path may be formed between one refrigerant inlet and one refrigerant outlet throughout the evaporator 200. In this way, the evaporator 200 may be very easily fabricated, and may effectively supply cold air even to the expanded freezing compartment.

Meanwhile, the fixed frames 300 and the elevating frame 400, which are vertically movable, may be used as a shelf assembly which is movable upward or downward.

The bottom plate portion 420 of the elevating frame 400 may be used as a vertically movable shelf, which may be vertically movably supported by the support bars 500.

Here, the sidewall plate portions 430 of the elevating frame 400 may be omitted. With omission of the sidewall plate portions 430, the drawer 600 may be mounted within the elevating frame 400 so as to be pulled out or pushed into as described above, and the shelf panel 800 mounted above the drawer 600 may be used as a vertically movable shelf.

Although the shelf assembly according to the exemplary embodiment of the present invention is vertically moved and supported by the pivoting support bars 500, only vertical movement of a shelf may be realized because the guide protrusions 410 of the elevating frame 400 are inserted into and guided by the vertical guide grooves 310.

That is, with a drive mechanism to move the shelf upward or downward, the shelf performs only vertical movement without front-and-rear movement and left-and-right movement, and thus there occurs no dead space due to horizontal movement of the shelf.

In addition, the support bars 500 used to support the shelf are connected to prevent the shelf from tilting leftward or rightward.

In addition, as the sliding shaft portions 530 provided at one side of the two front and rear support bars 500 are connected respectively to the sliding bars 560, the two support bars 500 pivot at the same angle, which also prevents the shelf from tilting forward or rearward.

In conclusion, with the shelf assembly of the present example, the shelf remains horizontally without tilting in the front-and-rear direction and in the left-and-right direction, thereby being moved only in the vertical direction.

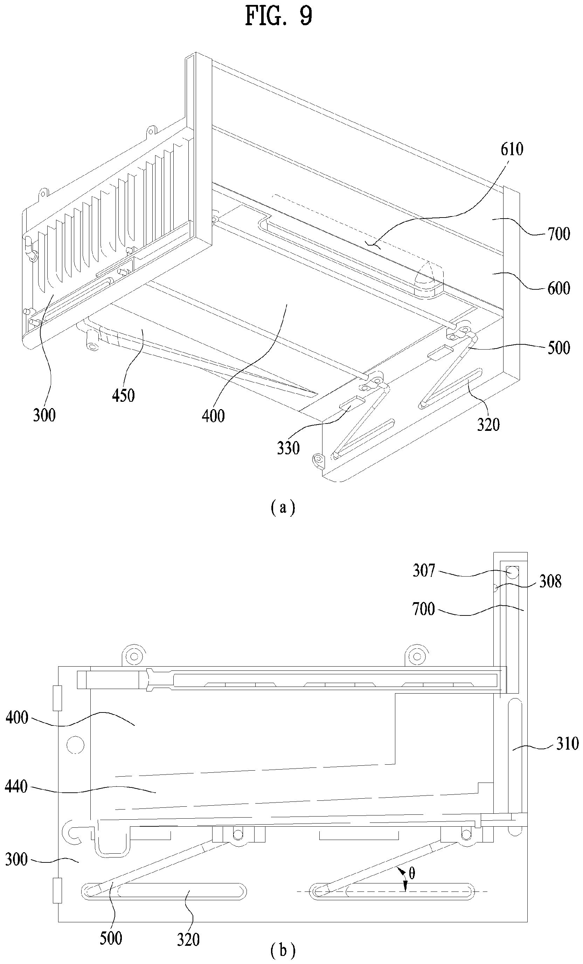

An operation process of the freezing compartment assembly 100 according to the present invention will be described with reference to FIGs. 9 to 12.

In FIGs. 9 to 12, illustration of, for example, the evaporator 200 and the freezing compartment door 130 is omitted. That is, illustration of the fixed freezing compartment 110 is omitted.

FIGs. 9(a) and 9(b) illustrate that the elevating frame 400 is at the downwardly moved position, the support bars 500 are tilted by a prescribed angle θ, and the lower surface of the elevating frame 400 is supported by the support ribs 330.

The drawer 600 is introduced into and supported by the elevating frame 400 and the pivoting cover 700 is vertically oriented to close an opening between the upper end of the front surface of the drawer 600 and the lower surface of the evaporator 200. That is, the pivoting cover 700 serves to close the front side of the expanded freezing compartment.

As exemplarily illustrated in FIG. 9(b), when the elevating frame 400 is at the downwardly moved position, an angle θ between the support bars 500 and the horizontal guide slots 320 may be 20 degrees or more.

When the angle between the support bars 500 and the horizontal guide slots 320 is excessively small, the user is required to apply large force when moving the elevating frame 400 upward.

As the support angle θ of the support bars 50 is 20 degrees or more at the downwardly moved position, it is possible to reduce force required to move the elevating frame 400 upward.

FIGs. 10(a) and 10(b) illustrate a state in which a lower portion of the pivoting cover 700 supported by the pivot shafts 307 is pivotably rotated upward and pushed inward.

The extension 305 of the fixed frames 300 is provided at an inner side surface thereof with a semicircular support protrusion 308, which is located at the rear lower side of the pivot shaft 307.

The support protrusion 308 supports the pivoting cover 700 so as to prevent the inwardly pushed pivoting cover 700 from pivoting about the pivot shaft 307 by the weight thereof.

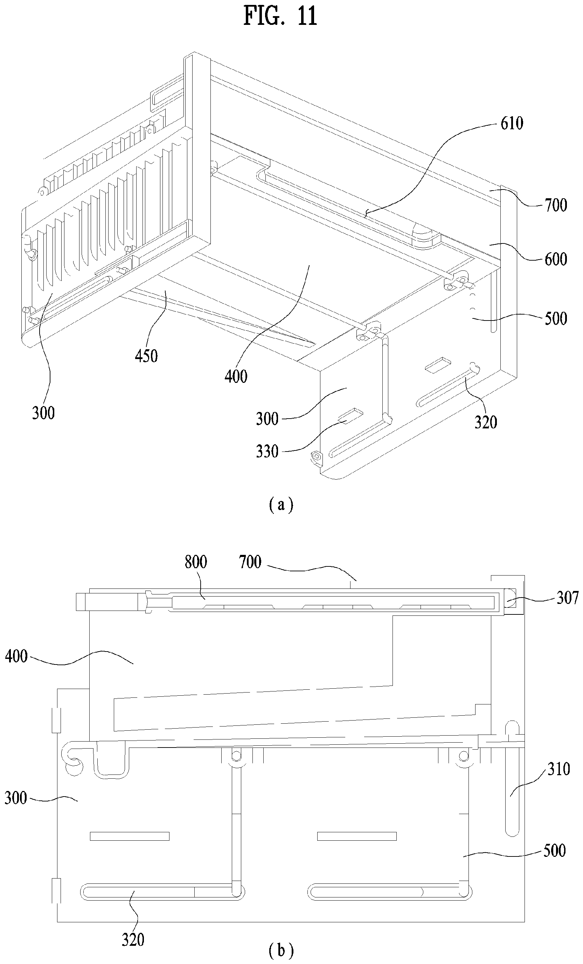

FIGs. 11(a) and 11(b) illustrate that the elevating frame 400 is moved upward in a state in which the lower portion of the pivoting cover 700 has pivoted upward and pushed inward.

The user can move the elevating frame 400 upward by lifting the lower surface of the elevating frame 400 by their hands.

Once the elevating frame 400 has been moved upward, the pivoting cover 700 overlaps the shelf panel 800 so as to cover the front surface of the shelf panel 800.

To again move the elevating frame 400 downward, the user can push a lower portion of one side of a front one of the support bars 500 rearward, thus causing the elevating frame 400 to be moved downward by the weight thereof.

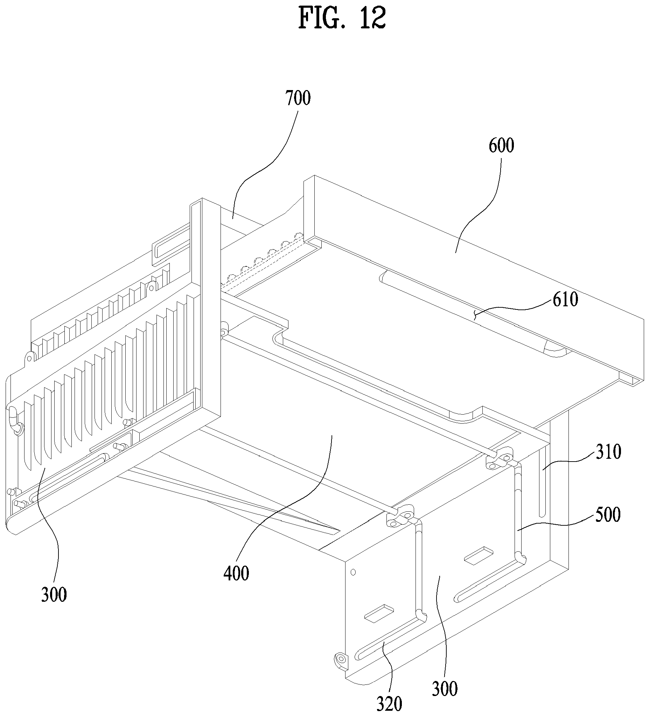

FIG. 12 illustrates a state in which the user pulls the drawer 600 out in the state of FIG. 11.

The drawer 600 may be pulled out regardless of a position of the elevating frame 400.

When the user inserts their fingers into the grip recess 610 and pulls the drawer 600, the drawer 600 may be pulled out until the protruding stopper 625 of the guide rib 620 is caught by the stepped portion 445.

As is apparent from the above description, with a refrigerator according to the examples, variable adjustment of the size of a freezing compartment may be accomplished via movement of a partition wall between the freezing compartment and a refrigerating compartment.

In addition, defrosting water generated on an evaporator installed near the freezing compartment may be effectively drained so as to prevent the defrosting water from flowing to a drive device which moves the partition wall.

In addition, with the evaporator which may be applied to the examples, the effective cooling of a variable freezing space as well as a fixed freezing space may be accomplished.

In addition, with the refrigerator according to the examples, a shelf assembly, which has a configuration capable of vertically moving a shelf, in addition to moving the shelf in the front-and-rear direction and in the left-and-right direction, may be provided.

With the refrigerator according to the examples, the freezing compartment and the refrigerating compartment may be separated from each other via a partition space (chiller chamber) and the effective variation in the size of a freezing space may be accomplished.

With the refrigerator according to the examples, as the freezing compartment to be expanded is surrounded by at least three evaporators, the provision of effective freezing performance even to the expanded freezing compartment may be accomplished.

With the refrigerator according to the examples, components, which are moved in order to vary the size of a freezing space may be firmly and stably supported, and it is possible to allow a user to easily vary the size of the freezing space.

With the refrigerator according to the examples, the freezing compartment and the refrigerating compartment may be isolated from each other in a single storage region, and, in addition to a door of the refrigerator, a freezing compartment door may be provided so as to open or close the freezing compartment after the door of the refrigerator is opened.

With the refrigerator according to the examples, there may be provided a cover capable of hermetically sealing a freezing compartment to be expanded.

It will be apparent to those skilled in the art that the examples are provided to assist understanding, and various modifications and variations can be made in the present invention, and the modifications and variations should not be understood individually from the viewpoint or scope of the present invention, which is defined by the appended claims.

## Claims

1. A refrigerator comprising:
a cabinet (10) having a storage compartment (20) therein;
a door mounted to the cabinet (10) so as to open or close the storage compartment (10);
a fixed freezing compartment (110) having a fixed capacity provided in the storage compartment (20);
**characterized by**
an evaporator (200) configured to define the fixed freezing compartment (110);
an elevating frame (400) movable with respect to the fixed freezing compartment (110) between a first position and a second position to define an additional expandable freezing compartment between the evaporator and the elevating frame; and by
fixed frames (300) secured to respective sidewalls of the storage compartment (20) so as to guide and support movement of the elevating frame (400).

2. The refrigerator according to claim 1,
wherein the elevating frame (400) includes a bottom plate portion (420) extending from one fixed frame to the other fixed frame.

3. The refrigerator according to any preceding claim, wherein each fixed frame includes a pair of horizontal guide slots (320) and the refrigerator further comprises a support bar (500) pivotably provided between the elevating frame (400) and the fixed frames (300), the support bar (500) being configured to guide and support movement of the elevating frame (400).

4. The refrigerator according to claim 3, wherein the support bar (500) includes:
a pivot shaft portion (510) mounted to the bottom plate portion (420) of the elevating frame (400) and configured to support the bottom plate portion (420);
mounting shaft portions (530) connecting the ends of the support bar (500) to respective horizontal guide slots (320); and
support shaft portions (520) connecting the ends of the pivot shaft portion (510) to respective mounting shaft portions (530).

5. The refrigerator according to claim 4, wherein as the elevating frame (400) is moved from the first position to the second position, an angle between the bottom plate portion (420) and the support shaft portions (520) is decreased, optionally, wherein the angle between the bottom plate portion (420) and the support shaft portions (520) in the first position is a right angle.

6. The refrigerator according to claim 5, wherein each fixed frame has a vertical guide groove (310), and
wherein the elevating frame (400) has a guide protrusion (410) configured to be inserted into the vertical guide groove (310) so as to guide movement of the elevating frame (400).

7. The refrigerator according to claim 2, wherein the elevating frame (400) includes:
sidewall plate portions (430) extending from both side ends of the bottom plate portion (420); and
a shelf panel (800) connected to ends of the sidewall plate portions (430) and spaced apart from the bottom plate portion (420).

8. The refrigerator according to claim 7, wherein the elevating frame (400) defines a chamber together with the bottom plate portion (420), the sidewall plate portions (430), and the shelf panel (800).

9. The refrigerator according to claim 8, further comprising a drawer (600) configured to be pushed into or pulled out of the chamber.

10. The refrigerator according to claim 7, wherein the shelf panel (800) contacts the evaporator (200) when the elevating frame (400) is in the first position, and wherein the expanded freezing compartment of the second position is defined between the evaporator (200) and the shelf panel (800).

11. The refrigerator according to claim 10, wherein the shelf panel (800) comprises a cold storage material.

12. The refrigerator according to claim 10, wherein the shelf panel (800) is provided with a pivoting cover (700), and the pivoting cover (700) is configured to pivot back and forth so as to open or close a front side of the expanded freezing compartment, optionally, wherein the pivoting cover (700) is slidable along the shelf panel (800) when the elevating frame (400) is in the first position.

13. The refrigerator according to any preceding claim, wherein the evaporator (200) further includes a first side extension and a second side extension extending into the expanded freezing compartment.

14. The refrigerator according to claim 13, wherein the fixed frames (300) are respectively provided with drain grooves (350), and the drain grooves (350) are located below the first side extension and the second side extension such that defrosting water generated on the evaporator (200) is introduced into the drain grooves (350), or, wherein the elevating frame (400) is provided at a rear portion thereof with a drain groove (450) such that defrosting water generated on the evaporator (200) is introduced into the drain groove (450).

15. The refrigerator according to any preceding claim, wherein the evaporator (200) is formed into a single plate.

## Patentansprüche

1. Kühlschrank, umfassend:
einen Schrank (10) mit einem Lagerfach (20) darin, eine am Schrank (10) montierte Tür zum Öffnen oder Schließen des Lagerfachs (10),
ein feststehendes Gefrierfach (110) mit einer festgelegten Kapazität, das im Lagerfach (20) vorgesehen ist,
**gekennzeichnet durch**
einen Verdampfer (200), der dazu ausgebildet ist, das feststehende Gefrierfach (110) zu definieren,
einen Heberahmen (400), der bezüglich des feststehenden Gefrierfachs (110) zwischen einer ersten Position und einer zweiten Position beweglich ist, um ein zusätzliches expandierbares Gefrierfach zwischen dem Verdampfer und dem Heberahmen zu definieren, und durch
feststehende Rahmen (300), die an jeweiligen Seitenwänden des Lagerfachs (20) befestigt sind, um eine Bewegung des Heberahmens (400) zu führen und zu stützen.

2. Kühlschrank nach Anspruch 1,
wobei der Heberahmen (400) einen Bodenplattenabschnitt (420) aufweist, der sich von einem feststehenden Rahmen zu dem anderen feststehenden Rahmen erstreckt.

3. Kühlschrank nach einem der vorhergehenden Ansprüche, wobei jeder feststehende Rahmen ein Paar horizontale Führungsschlitze (320) aufweist und der Kühlschrank ferner eine Stützstange (500) umfasst, die schwenkbar zwischen dem Heberahmen (400) und den feststehenden Rahmen (300) vorgesehen ist, wobei die Stützstange (500) dazu ausgebildet ist, eine Bewegung des Heberahmens (400) zu führen und zu stützen.

4. Kühlschrank nach Anspruch 3, wobei die Stützstange (500) Folgendes aufweist:
einen Schwenkwellenabschnitt (510), der an dem Bodenplattenabschnitt (420) des Heberahmens (400) montiert und dazu ausgebildet ist, den Bodenplattenabschnitt zu stützen,
Montagewellenabschnitte (530), die die Enden der Stützstange (500) mit jeweiligen horizontalen Führungsschlitzen (320) verbinden, und
Stützwellenabschnitte (520), die die Enden des Schwenkwellenabschnitts (510) mit jeweiligen Montagewellenabschnitten (530) verbinden.

5. Kühlschrank nach Anspruch 4, wobei ein Winkel zwischen dem Bodenplattenabschnitt (420) und den Stützwellenabschnitten (520) kleiner wird, während der Heberahmen (400) aus der ersten Position in die zweite Position bewegt wird, wahlweise wobei der Winkel zwischen dem Bodenplattenabschnitt (420) und den Stützwellenabschnitten (520) in der ersten Position ein rechter Winkel ist.

6. Kühlschrank nach Anspruch 5, wobei jeder feststehende Rahmen eine vertikale Führungsnut (310) hat und wobei der Heberahmen (400) einen Führungsvorsprung (410) hat, der dazu ausgebildet ist, in die vertikale Führungsnut (310) eingeführt zu werden, um die Bewegung des Heberahmens (400) zu führen.

7. Kühlschrank nach Anspruch 2, wobei der Heberahmen (400) Folgendes aufweist:
Seitenwandplattenabschnitte (430), die sich von beiden Seitenenden des Bodenplattenabschnitts (420) erstrecken, und
eine Regalplatte (800), die mit Enden der Seitenwandplattenabschnitte (430) verbunden und vom Bodenplattenabschnitt (420) beabstandet ist.

8. Kühlschrank nach Anspruch 7, wobei der Heberahmen (400) zusammen mit dem Bodenplattenabschnitt (420), den Seitenplattenabschnitten (430) und der Regalplatte (800) eine Kammer definiert.

9. Kühlschrank nach Anspruch 8, ferner umfassend eine Schublade (600), die dazu ausgebildet ist, in die Kammer hineingeschoben oder aus ihr herausgezogen zu werden.

10. Kühlschrank nach Anspruch 7, wobei die Regalplatte (800) den Verdampfer (200) kontaktiert, wenn der Heberahmen (400) in der ersten Position ist, und wobei das expandierte Gefrierfach der zweiten Position zwischen dem Verdampfer (200) und der Regalplatte (800) definiert ist.

11. Kühlschrank nach Anspruch 10, wobei die Regalplatte (800) ein Kühllagerungsmaterial umfasst.

12. Kühlschrank nach Anspruch 10, wobei die Regalplatte (800) mit einer Schwenkabdeckung (700) versehen ist und die Schwenkabdeckung (700) dazu ausgebildet ist, hin- und herzuschwenken, um eine Vorderseite des expandierten Gefrierfachs zu öffnen oder zu schließen, wahlweise wobei die Schwenkabdeckung (700) entlang der Regalplatte (800) verschiebbar ist, wenn der Heberahmen (400) in der ersten Position ist.

13. Kühlschrank nach einem der vorhergehenden Ansprüche, wobei der Verdamper (200) ferner eine erste Seitenverlängerung und eine zweite Seitenverlängerung aufweist, die sich in das expandierte Gefrierfach erstrecken.

14. Kühlschrank nach Anspruch 13, wobei die feststehenden Rahmen (300) jeweils mit Ablaufnuten (350) versehen sind und die Ablaufnuten (350) unter der ersten Seitenverlängerung und der zweiten Seitenverlängerung angeordnet sind, so dass am Verdampfer (200) erzeugtes Abtauwasser in die Ablaufnuten (350) eingeführt wird, oder wobei der Heberahmen (400) an einem hinteren Abschnitt davon mit einer Ablaufnut (450) versehen ist, so dass am Verdampfer (200) erzeugtes Abtauwasser in die Ablaufnut (450) eingeführt wird.

15. Kühlschrank nach einem der vorhergehenden Ansprüche, wobei der Verdampfer (200) als eine einzelne Platte ausgebildet ist.

## Revendications

1. Réfrigérateur, comprenant :
une armoire (10) contenant un compartiment de conservation (20) ;
une porte montée sur l'armoire (10) de manière à ouvrir ou fermer le compartiment de conservation (10) ;
un compartiment de congélation fixe (110) ayant une capacité fixe prévu dans le compartiment de conservation (20) ;
**caractérisé par**
un évaporateur (200) configuré pour définir le compartiment de congélation fixe (110) ;
un cadre levable (400) déplaçable par rapport au compartiment de congélation fixe (110) entre première position et une deuxième position pour définir un compartiment de congélation supplémentaire pouvant être agrandi entre l'évaporateur et le cadre levable ; et par
des cadres fixes (300) fixés à des parois latérales respectives du compartiment de conservation (20) de manière à guider et supporter le mouvement du cadre levable (400).

2. Réfrigérateur selon la revendication 1, dans lequel le cadre levable (400) comporte une portion de plaque inférieure (420) s'étendant depuis un cadre fixe jusqu'à l'autre cadre fixe.

3. Réfrigérateur selon l'une quelconque des revendications précédentes, dans lequel chaque cadre fixe comporte une paire de fentes de guidage horizontales (320) et le réfrigérateur comprend en outre une barre de support (500) prévue de manière à pouvoir pivoter entre le cadre levable (400) et les cadres fixes (300), la barre de support (500) étant configurée pour guider et supporter le mouvement du cadre levable (400).

4. Réfrigérateur selon la revendication 3, dans lequel la barre de support (500) comporte :
une portion d'axe de pivotement (510) montée sur la portion de plaque inférieure (420) du cadre levable (400) et configurée pour supporter la portion de plaque inférieure (420) ;
des portions d'axe de montage (530) reliant les extrémités de la barre de support (500) à des fentes de guidages horizontales respectives (320) ; et
des portions d'axe de support (520) reliant les extrémités de la portion d'axe de pivotement (510) à des portions d'axe de montage respectives (530).

5. Réfrigérateur selon la revendication 4, dans lequel, à mesure que le cadre levable (400) est déplacé de la première position à la deuxième position, un angle entre la portion de plaque inférieure (420) et les portions d'axe de support (520) est réduit, facultativement dans lequel l'angle entre la portion de plaque inférieure (420) et les portions d'axe de support (520) dans la première position est un angle droit.

6. Réfrigérateur selon la revendication 5, dans lequel chaque cadre fixe présente une rainure de guidage verticale (310), et
dans lequel le cadre levable (400) présente une saillie de guidage (110) configurée pour être insérée dans la rainure de guidage verticale (310) de manière à guider le mouvement du cadre levable (400) .

7. Réfrigérateur selon la revendication 2, dans lequel le cadre levable (400) comporte :
des portions de plaque de paroi latérale (430) s'étendant depuis les deux extrémités latérales de la portion de plaque inférieure (420) ; et
un panneau d'étagère (800) relié à des extrémités des portions de plaque de paroi latérale (430) et espacé de la portion de plaque inférieure (420).

8. Réfrigérateur selon la revendication 7, dans lequel le cadre levable (400) définit une chambre conjointement avec la portion de plaque inférieure (420), les portions de plaque de paroi latérale (430) et le panneau d'étagère (800).

9. Réfrigérateur selon la revendication 8, comprenant en outre un tiroir (600) configuré pour être poussé dans la chambre ou sorti de celle-ci.

10. Réfrigérateur selon la revendication 7, dans lequel le panneau d'étagère (800) vient en contact avec l'évaporateur (200) lorsque le cadre levable (400) est dans la première position, et dans lequel le compartiment de congélation agrandi de la deuxième position est défini entre l'évaporateur (200) et le panneau d'étagère (800).

11. Réfrigérateur selon la revendication 10, dans lequel le panneau d'étagère (800) comprend un matériau de conservation au froid.

12. Réfrigérateur selon la revendication 10, dans lequel le panneau d'étagère (800) est pourvu d'un couvercle pivotant (700), et le couvercle pivotant (700) est configuré pour pivoter d'avant en arrière de manière à ouvrir ou fermer un côté avant du compartiment de congélation agrandi, facultativement dans lequel le couvercle pivotant (700) peut coulisser le long du panneau d'étagère (800) lorsque le cadre levable (400) est dans la première position.

13. Réfrigérateur selon l'une quelconque des revendications précédentes, dans lequel l'évaporateur (200) comporte en outre une première extension latérale et une deuxième extension latérale s'étendant dans le compartiment de congélation agrandi.

14. Réfrigérateur selon la revendication 13, dans lequel les cadres fixes (300) sont respectivement pourvus de rainures de drainage (350), et les rainures de drainage (350) sont situées en dessous de la première extension latérale et de la deuxième extension latérale de telle sorte que l'eau de décongélation produite sur l'évaporateur (200) soit introduite dans les rainures de drainage (350), ou dans lequel le cadre levable (400) est pourvu, au niveau d'une portion arrière de celui-ci, d'une rainure de drainage (450) de telle sorte que l'eau de décongélation produite sur l'évaporateur (200) soit introduite dans la rainure de drainage (450).

15. Réfrigérateur selon l'une quelconque des revendications précédentes, dans lequel l'évaporateur (200) est formé sous forme de plaque unique.
